(19) Europäisches Patentamt

European Patent Office

Office européen des brevets

(11) **EP 1 032 473 B1**

(12) **FASCICULE DE BREVET EUROPEEN**

(45) Date de publication et mention
de la délivrance du brevet:
**13.02.2002 Bulletin 2002/07**

(51) Int Cl.⁷: $B04B\ 1/00$, B04C 3/06

(21) Numéro de dépôt: **98955683.2**

(22) Date de dépôt: **18.11.1998**

(86) Numéro de dépôt international:
**PCT/FR98/02457**

(87) Numéro de publication internationale:
**WO 99/25479 (27.05.1999 Gazette 1999/21)**

(54) **DISPOSITIF ET PROCEDE POUR LA SEPARATION D'UN MELANGE HETEROGENE**

VORRICHTUNG UND VERFAHREN ZUR TRENNUNG EINES HETEROGENEN GEMISCHES

DEVICE AND METHOD FOR SEPARATING A HETEROGENEOUS MIXTURE

(84) Etats contractants désignés:
**DE GB NL**

(30) Priorité: **18.11.1997 FR 9714419**

(43) Date de publication de la demande:
**06.09.2000 Bulletin 2000/36**

(73) Titulaire: **TOTAL**
**92800 Puteaux (FR)**

(72) Inventeurs:
• **LECOFFRE, Yves**
**F-38000 Grenoble (FR)**

• **GAY, Jean-Claude**
**F-78690 Les Essarts le Roi (FR)**

(74) Mandataire: **Jolly, Jean-Pierre et al**
**Cabinet Jolly 54, rue de Clichy**
**75009 Paris (FR)**

(56) Documents cités:
**EP-A- 0 037 347**     **FR-A- 2 507 503**
**FR-A- 2 588 779**     **FR-A- 2 652 762**
**US-A- 3 405 803**     **US-A- 3 904 109**
**US-A- 4 148 735**     **US-A- 4 846 780**
**US-A- 5 180 257**     **US-A- 5 320 500**

## Description

L'invention concerne un dispositif pour la séparation des constituants d'un mélange hétérogène ainsi que ses utilisations.

Dans de nombreuses applications industrielles, on peut être amené à séparer au moins deux fluides non miscibles, par exemple un gaz et un liquide, deux liquides non miscibles ou les phases d'un mélange ternaire formé de deux liquides et d'un gaz. De plus, il arrive fréquemment que le mélange initial contienne des particules solides qu'il est souhaitable d'introduire de manière préférentielle dans l'un ou l'autre des fluides séparés.

Pour réaliser cette opération, il existe plusieurs procédés connus, parmi lesquels les suivants :

-   les séparateurs gravitaires. Ce sont des appareils de volume important dans lequel le temps de séjour de l'émulsion est de plusieurs dizaines de secondes. La technologie correspondante est connue et fait partie de l'art de l'ingénieur. On utilise, en particulier. des décanteurs munis de plaques parallèles internes;
-   les centrifugeuses. Ce sont des appareils entraînés par un moteur dans lesquels les phases lourdes sont centrifugées et les phases légères centripétées sous l'action d'un champ d'écoulement tournant. La vitesse tangentielle du fluide dans l'appareil est proportionnelle au rayon, ce qui limite son efficacité;
-   les cyclones. Ce sont des appareils fixes dans lesquels le mélange est introduit en périphérie de l'appareil tangentiellement à la paroi la plus éloignée de l'axe. Il se crée un écoulement dont la vitesse tangentielle augmente à mesure qu'on se rapproche du centre de l'appareil, ou tout au moins des orifices de sortie. Ces orifices de sortie sont situés près de l'axe de l'appareil, et le liquide les traverse selon une direction générale axiale. L'efficacité de ces appareils est assez bonne et ils sont largement appliqués pour réaliser des séparations de solides et de liquides, du triage de particules en fonction de leurs dimensions ou de la séparation liquide-liquide. Ces cyclones présentent néanmoins quelques inconvénients, dus au frottement du fluide sur les parois. Ceci a pour effet de créer une forte turbulence interne qui tend à remélanger les espèces, à freiner la rotation et à engendrer des pertes de charge très importantes. Par ailleurs, en séparation liquide-liquide, ces cyclones classiques ne peuvent fonctionner que si leur taille est petite, typiquement inférieure à 80 mm de diamètre. En conséquence, il est indispensable de les placer en parallèle si on souhaite faire transiter des débits importants. Ceci est très contraignant lorsqu'on cherche par exemple à effectuer de la séparation eau-huile en fond de puits de pétrole;

-   le séparateur tournant à alimentation périphérique longitudinale. Il s'agit d'un séparateur dont les parois tournent autour d'un axe, comme celles d'une centrifugeuse, la séparation s'effectuant dans une chambre cylindrique, l'alimentation en mélange de ladite chambre se faisant selon une direction axiale au travers de canaux parallèles à l'axe de rotation situés en périphérie de la chambre cylindrique, les sorties des fluides séparés se faisant au travers d'orifices cylindriques percés aux extrémités de la chambre tournante. Un tel séparateur est décrit dans le brevet français n° 2 592 324 déposé le 2 janvier 1986 dont les inventeurs sont Y.Lecoffre et J.Woillez. Elles permettent de réaliser une entrée dans le repère tournant selon une direction axiale, de telle sorte que, dans le repère absolu, le fluide entre avec une vitesse de rotation presque exactement égale à celle de la chambre cylindrique. Ceci permet de limiter très fortement les frottements tangentiels sur les parois de la chambre. On obtient alors un champ de vitesses dans la chambre de type Vortex, dans lequel la vitesse tangentielle est inversement proportionnelle au rayon. Elle augmente donc rapidement lorsqu'on se rapproche du centre de l'appareil, ce qui a pour effet d'augmenter spectaculairement les vitesses de migration radiale des globules à séparer. L'appareil réalise une séparation très efficace, malgré des temps de séjour de l'ordre de la seconde. Il est donc particulièrement compact. De plus, et c'est là une de ses caractéristiques importantes, il peut fonctionner dans une large gamme de débits du mélange d'entrée, dont le rapport entre les débits extrêmes est supérieur à 20. Ce séparateur présente, dans ses versions actuelles de séparation de deux liquides non miscibles, les inconvénients suivants :

-   le liquide léger séparé contient toujours une quantité importante et souvent prépondérante de liquide lourd;
-   les pertes de charge sur le liquide lourd sont relativement importantes;
-   les pertes de charge sur le liquide léger sont pratiquement doubles des pertes de charge sur le liquide lourd. On atteint ainsi dans certains cas des pertes de charge d'une dizaine de bars;
-   l'appareil ne traite que des mélanges contenant une faible quantité de liquide léger, typiquement de l'ordre de 1% à 3%;
-   l'entraînement de l'appareil s'effectue au moyen d'un moteur placé latéralement et d'une courroie, ce qui augmente fortement son encombrement latéral et interdit son utilisation dans des tuyauteries de petit diamètre, comme c'est le cas, en exploitation pétrolière.

Le brevet américain n° 3 405 803 concerne un séparateur à vortex pour la clarification d'une suspension contenant des particules. Ce séparateur dispose d'une chambre à vortex 1 présentant une partie inférieure conique, l'évacuation de la suspension clarifiée s'effectue du même côté que l'introduction de la suspension à clarifier. Seules les particules lourdes sont éliminées par l'extrémité 3 de la chambre à vortex 1 opposée à celle où est effectuée l'introduction de la suspension à clarifier.

Un tel séparateur, s'il permet une clarification d'une suspension contenant des particules, ne réalise de toute façon pas une réelle séparation des constituants de la suspension.

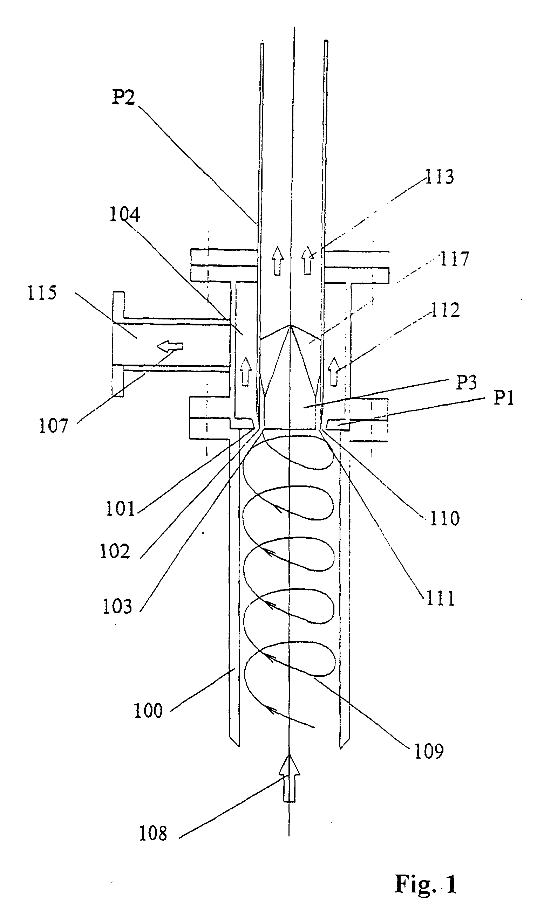

La demande de brevet européen publiée sous le n° 37 347 propose un procédé et un dispositif pour la séparation de particules dans un fluide. Le procédé nécessite que la suspension à traiter soit introduite suivant une direction légèrement oblique par rapport à l'axe longitudinal de l'enceinte, de manière à ce qu'elle ait une vitesse angulaire initiale supérieure à la vitesse angulaire de l'enceinte. Le dispositif (Fig. 1,5,7,8,9) comprend une enceinte conique de révolution 1 tournant autour de son axe, une sortie 12,13 de la suspension épurée et des fractions séparées située à l'extrémité opposée de celle de l'enceinte où se situe l'entrée 8 de la suspension, la sortie 12 de la fraction la plus lourde étant située en périphérie de l'enceinte, c'est-à-dire que son diamètre extérieur est égal au diamètre intérieur de l'enceinte 1. En outre, ce diamètre extérieur de la sortie 12 est même souvent augmenté par un élargissement de l'enceinte au niveau de cette sortie 12, comme on peut le voir sur les figures 1,5 et 7. Ces dispositions empêchent l'établissement d'un effet cyclonique nécessaire pour obtenir une bonne séparation. Par ailleurs, le dispositif proposé dans cette demande de brevet européen fait appel à un fluide auxiliaire, il doit avoir de grandes dimensions et il fonctionne avec une accélération centrifuge moyenne faible et un temps de séjour long.

L'objet de la présente invention est de remédier aux inconvénients précités. Il concerne donc aussi bien les séparateurs tournants à alimentation périphérique que les séparateurs fixes, sous réserve qu'ils fonctionnent avec des caractéristiques inhabituelles. La présente invention vise donc à répondre aux besoins suivants :

- limiter les pertes de charge;
- pouvoir intégrer le séparateur dans une tuyauterie de petit diamètre et tout spécialement un tube de puits de production de pétrole;
- permettre de séparer les fluides contenus dans des mélanges liquide-liquide riches en l'un ou l'autre des constituants;
- pouvoir intégrer le séparateur à une ligne d'arbre de pompe dans le cas d'un séparateur tournant;
- pouvoir séparer des solides;
- réinjecter les solides séparés dans l'une ou l'autre des phases liquides;
- séparer des gaz;

- effectuer une séparation des gaz, puis des liquides et des solides dans un appareil intégré;
- intégrer un séparateur de finition sur l'un ou l'autre des liquides à séparer;
- mettre en oeuvre des moyens de régulation des débits de liquide;
- mettre en oeuvre des dispositions permettant de limiter les fluctuations de concentration à l'entrée du séparateur;
- mettre en oeuvre des dispositions permettant d'optimiser les conditions d'alimentation de l'appareil.

Dans les appareils existants, la sortie du liquide le moins dense se fait en général au travers de tubes de petit diamètre parfois situés du côté de l'entrée du mélange, parfois du côté opposé à cette entrée de mélange. Par ailleurs, ces appareils fonctionnent toujours avec un débit réduit $\xi$ inférieur à 0.1 Ce paramètre $\xi$ est défini par

$$\xi = \frac{Q}{\pi R_0^2 V_{T0}^2},$$

où Q est le débit en $m^3/s$, $R_0$ le rayon extérieur en mètres à l'entrée du tube dans lequel s'effectue la séparation et $V_{T0}$ la vitesse tangentielle en mètres par seconde en ce même point. La conséquence de cette conception est que les frottements dans l'appareil sont très élevés en raison de la faible valeur du coefficient de débit. Par ailleurs, les pertes de charge sont également importantes, malgré ce frottement intense, car la récupération du liquide léger se fait au point où la pression dans le séparateur est la plus faible, c'est à dire sur son axe. Enfin, au travers de la sortie de liquide léger passe une quantité appréciable de fluide lourd en raison de recirculations qui se produisent dans la sortie de liquide lourd. On recueille donc toujours un liquide léger chargé de liquide lourd.

On connaît, par EP-A- 0 037 347, un dispositif pour la séparation des constituants d'un mélange hétérogène, ce dispositif comprenant une chambre de séparation ayant à l'une de ses extrémités une entrée et à l'autre de ses extrémités une sortie comportant un premier orifice annulaire, coaxial avec ladite chambre, et un second orifice annulaire, coaxial avec ledit premier orifice annulaire et dont le diamètre extérieur est inférieur au diamètre intérieur dudit premier orifice annulaire, ladite chambre de séparation présentant une forme cylindrique et le diamètre extérieur dudit premier orifice annulaire étant égal au diamètre intérieur de ladite chambre.

C'est à un dispositif de ce type général que s'intéresse la présente invention et elle se caractérise en ce que la chambre de séparation présente une forme cylindrique, en ce que le diamètre extérieur $D_1$ du premier orifice annulaire est inférieur au diamètre intérieur $D_0$ de la chambre et en ce que la sortie de la chambre de séparation présente :

- une pièce annulaire périphérique, s'étendant depuis la paroi de la chambre de séparation vers l'axe de cette chambre,
- une pièce sensiblement cylindrique,
- une pièce centrale ayant une section transversale circulaire,
- la pièce sensiblement cylindrique étant disposée entre la pièce annulaire périphérique et la pièce centrale, et les trois pièces étant coaxiales avec la chambre de séparation, de façon à ce que

    * le premier orifice annulaire soit constitué par l'espace entré la pièce annulaire périphérique et la pièce sensiblement cylindrique, et
    * le second orifice annulaire soit constitué par l'espace entre la pièce sensiblement cylindrique et la pièce centrale.

Les caractéristiques du dispositif selon l'invention conduisent à aspirer le fluide léger, non pas au centre de l'écoulement tourbillonnaire où la pression est minimale, mais selon un rayon plus grand pour lequel la pression est plus forte, ce qui limite les pertes de charge.

La chambre de séparation présente une section transversale circulaire. Elle peut être sensiblement cylindrique, mais, contrairement ce que l'on peut voir dans les dispositifs de l'art antérieur, selon l'invention, les formes conique ou tronconique sont à éviter. De plus, l'entrée et la sortie sont axialement éloignées, ce qui permet à la séparation de s'opérer correctement entre elles.

En outre, une caractéristique importante selon l'invention est que le premier orifice annulaire, c'est-à-dire celui qui présente le diamètre moyen le plus élevé, doit avoir un diamètre extérieur inférieur au diamètre intérieur de la chambre de séparation, ceci afin d'obtenir un effet cyclonique satisfaisant.

Le premier orifice annulaire ou couronne de sortie du liquide lourd doit être dimensionné de telle sorte que le liquide lourd sorte du séparateur en tout point de cette couronne et qu'il n'y ait pas de recirculations comme c'est le cas dans les cyclones traditionnels.

Dans le présent exposé, on entend par "largeur d'une couronne", la différence des diamètres des deux cercles qui la limitent.

Pour une couronne de largeur donnée, il existe un débit minimum qui permet d'obtenir ces conditions. On s'efforce donc de toujours travailler à un débit supérieur à ce débit minimum de mise en charge de la couronne de sortie du liquide lourd. Ce débit minimum peut être déterminé soit par le calcul, soit à partir d'expériences. Par exemple, pour un cyclone à parois tournantes de diamètre extérieur $D_0$ égal à 100 mm, tournant à 3000 tr/mn, ce débit minimum correspondant à une couronne de diamètre extérieur égal à 70 mm et de largeur égale à 5 mm est de l'ordre de 10 l/s. Ce débit minimum est ajustable par simple variation de la largeur de la couronne de sortie du liquide lourd.

Le diamètre intérieur $D_3$ du second orifice annulaire ou couronne de sortie du liquide léger constitue la limite inférieure pour laquelle l'écoulement est en rotation de type vortex. Lorsque l'on se trouve à un diamètre supérieur, l'écoulement dans le séparateur est sain et la séparation se fait correctement. Pour les diamètres inférieurs, l'écoulement dans le séparateur se transforme en une zone de liquide mort où la distribution de vitesse tangentielle est proportionnelle au rayon courant, cette zone étant aussi appelée en rotation solide. Du point de vue de la séparation, cette zone est inutile et, étant donné son faible volume, son efficacité en matière de séparation est quasi nulle. On peut dire que, pratiquement, un cyclone dont le diamètre $D_3$ est au maximum égal à la moitié du diamètre externe du séparateur a des performances en séparation aussi bonnes que si $D_3$ était très petit, mais ses pertes de charge sont très inférieures, par exemple deux à dix fois inférieures à celles d'un cyclone traditionnel, à parois fixes ou tournantes. Toujours au premier ordre, la perte de charge d'un cyclone ne dépend que du coefficient de débit $\xi$ et du rapport $\delta = \dfrac{D_0}{D_3}$. Pratiquement, la perte de charge varie comme $\delta^2$ lorsque la couronne d'extraction de liquide lourd ne présente pas de recirculations. Plus le diamètre du tube d'extraction de liquide léger est faible et plus la perte de charge est élevée; cette tendance étant parfaitement confirmée par les essais disponibles dans la littérature.

Enfin, la qualité de la séparation, et, en particulier, le taux résiduel de liquide lourd dans le liquide léger dépendent de la présence ou non de recirculations dans la sortie de liquide lourd. En l'absence de recirculation, on peut espérer extraire un produit léger quasiment pur.

On comprend, au travers de cette présentation, l'importance capitale des orifices de sortie sur les performances d'un séparateur liquide-liquide.

Le dispositif selon l'invention peut donc être utilisé pour traiter un mélange constitué de deux liquides non miscibles de densités différentes contenant éventuellement un gaz ou mélange de gaz et/ou des particules solides.

L'invention concerne également un procédé de séparation des constituants d'un mélange hétérogène, dans lequel:

on introduit le mélange à traiter à l'entrée d'un dispositif comprenant une chambre de séparation ayant à l'une de ses extrémités une entrée et à l'autre de ses extrémités une sortie comportant un premier orifice annulaire coaxial avec ladite chambre, et un second orifice annulaire coaxial avec ledit premier orifice annulaire et dont le diamètre extérieur est inférieur au diamètre intérieur dudit premier orifice annulaire, ladite chambre de séparation présentant une forme cylindrique et le diamètre extérieur $D_1$ dudit premier orifice annulaire étant inférieur au diamètre intérieur $D_0$ de ladite chambre, tan-

dis que la sortie de la chambre de séparation présente :

- une pièce annulaire périphérique, s'étendant depuis la paroi de la chambre de séparation vers l'axe de cette chambre,
- une pièce sensiblement cylindrique,
- une pièce centrale ayant une section transversale circulaire,
- la pièce sensiblement cylindrique étant disposée entre la pièce annulaire périphérique et la pièce centrale, et les trois pièces étant coaxiales avec la chambre de séparation, de façon à ce que

    * le premier orifice annulaire soit constitué par l'espace entre la pièce annulaire périphérique et la pièce sensiblement cylindrique, et
    * le second orifice annulaire soit constitué par l'espace entre la pièce sensiblement cylindrique et la pièce centrale ;

et on récupère une fraction lourde à travers ledit premier orifice annulaire et une fraction légère à travers ledit second orifice annulaire.

Selon un premier mode de réalisation de l'invention, l'entrée du mélange dans la chambre de séparation est réalisée au travers de canaux périphériques tournants dont au moins la sortie est parallèle à l'axe de rotation du séparateur, ce séparateur étant lui-même tournant.

Selon un second mode de réalisation de l'invention, l'entrée du mélange dans la chambre tournante se fait au travers de canaux radiaux tournants, le liquide ayant été préalablement lancé par frottement sur des parois tournantes situées à l'extérieur de la chambre proprement dite.

Selon un troisième mode de réalisation de l'invention, l'entrée du mélange se fait au travers d'une pluralité d'orifices percés dans la paroi du séparateur, dans la zone d'entrée opposée aux sorties, ces orifices pénétrant tangentiellement dans la chambre de séparation qui est fixe.

Selon un quatrième mode de réalisation de l'invention, la chambre de séparation est fixe, mais le mélange est injecté dans une chambre d'alimentation dont le diamètre est supérieur à celui de la chambre de séparation proprement dite. Cette disposition permet de limiter les vitesses à l'entrée de l'appareil et l'émulsification gênante qui peut en résulter.

Selon un cinquième mode de réalisation de l'invention, un gaz est injecté dans la partie centrale de l'appareil en faible quantité, cette disposition permettant d'éviter la création de turbulence entre le coeur de l'écoulement en rotation solide et la zone saine externe. Dans certains cas, il n'est pas nécessaire d'injecter ce gaz en excès et le gaz naturellement présent à l'entrée est suffisant. Dans ce dernier cas, si le débit de gaz est trop important, il peut être extrait par un tube situé au centre du séparateur.

Selon un sixième mode de réalisation de l'invention, l'appareil est muni d'une ou plusieurs sorties supplémentaires périphériques permettant de collecter les particules et une certaine quantité de fluide lourd et d'introduire ce mélange dans l'un ou l'autre des débits extraits au centre de l'appareil.

Selon un septième mode de réalisation de l'invention, les dimensions des orifices de sortie peuvent être réglées continûment par action sur la lèvre circulaire de séparation des deux flux.

D'autres caractéristiques et avantages de la présente invention apparaîtront mieux à la lecture de l'exposé qui suit de plusieurs modes de mise en oeuvre de l'invention donnés à titre d'exemples non limitatifs. La description se réfère aux figures annexées parmi lesquelles :

- la figure 1 est une représentation schématique du principe de l'invention dans lequel sont représentées les deux couronnes de sortie séparées par une lèvre circulaire coplanaire;
- la figure 2 représente schématiquement le premier mode de réalisation, dans lequel la mise en rotation s'effectue dans un séparateur tournant alimenté par des entrées périphériques radiales précédées d'un lanceur à friction;
- la figure 3 représente schématiquement le second mode de réalisation de l'invention, dans lequel la mise en rotation se fait dans un séparateur tournant alimenté par des entrées périphériques axiales. L'appareil est muni de sorties périphériques permettant d'introduire les particules séparées dans le flux de sortie de fluide lourd;
- les figures 4a et 4b représentent schématiquement. en vue de face et en vue de dessous respectivement, le troisième mode de réalisation de l'invention, dans laquel le séparateur est fixe, la mise en rotation s'effectuant au moyen d'orifices percés dans la virole d'entrée pénétrant tangentiellement dans la chambre de séparation. L'appareil est muni d'un circuit d'évacuation des particules solides dans le flux de sortie de fluide léger. L'entrée est réglable par ajustement du nombre d'orifices;
- les figures 5a et 5b représentent schématiquement, en vue de face et en vue de dessous, respectivement, le quatrième mode de réalisation de l'invention, dans lequel l'alimentation s'effectue par des entrées tangentielles multiples débouchant dans un cylindre dont le diamètre est supérieur à celui de la chambre de séparation proprement dite. Cet appareil est par ailleurs muni d'une sortie de gaz axiale,
- la figure 6 représente schématiquement le cinquième mode de réalisation de l'invention, dans lequel est prévue une injection d'air destinée à réduire les frottements, la sortie du fluide léger se faisant au travers d'une tuyauterie entourée d'une gaine d'air;
- les figures 7a et 7b représentent schématiquement en vue de face et en vue de dessous, respectivement, un dispositif selon l'invention muni de moyens de détection de la présence de liquide léger dans le liquide lourd;

- les figures 8a et 8b représentent schématiquement, en vue de face et en vue de dessous, respectivement, un autre dispositif selon l'invention muni de moyens de détection de la présence de liquide léger dans le liquide lourd;

- la figure 9a représente schématiquement une variante du dispositif selon l'invention utilisable dans un puits de pétrole;

- la figure 9b représente un agrandissement d'une partie du dispositif de la figure 9a;

- la figure 10 représente schématiquement une autre variante du dispositif selon l'invention utilisable dans un puits de pétrole;

- la figure 11a représente schématiquement un dispositif selon l'invention, précédé d'un mélangeur;

- la figure 11b est un agrandissement d'une partie de la figure 11b, montrant plus en détail le mélangeur

Le dispositif de séparation selon l'invention va maintenant être décrit en détail en se référant aux figures annexées 1 à 11.

La figure 1 montre un ensemble constitué de la chambre de séparation 100 de diamètre extérieur $D_0$, d'une pièce ou partie annulaire périphérique P1, s'étendant depuis la paroi de la chambre de séparation 100 vers l'axe de cette chambre 100, d'une pièce sensiblement cylindrique P2, d'une pièce centrale P3 ayant une section transversale circulaire.

La pièce sensiblement cylindrique P2 est disposée entre la pièce annulaire périphérique P1 et la pièce centrale P3, et les trois pièces sont coaxiales avec la chambre de séparation 100. Le premier orifice annulaire ou couronne 110 est constitué par l'espace entre la pièce annulaire périphérique P1 et la pièce sensiblement cylindrique P2, et le second orifice annulaire ou couronne 111 est constitué par l'espace entre la pièce sensiblement cylindrique P2 et la pièce centrale P3

Les orifices annulaires ou couronnes sont limités par les cercles 101 de diamètre $D_1$, 102 de diamètre $D_2$ et 103 de diamètre $D_3$. La couronne 110 située entre les cercles 101 et 102 débouche dans la chambre de recueil 104 communiquant avec la conduite d'évacuation 115 ; la couronne 111 limitée par le cercle ou extrémité 102 et le cercle 103 débouche à l'intérieur de la pièce cylindrique P2.

Le mélange à séparer se dirige vers la sortie du séparateur dans la direction générale 108 selon des trajectoires hélicoïdales matérialisées sur la figure 1 par la spirale 109. En raison de cet écoulement tourbillonnaire, le fluide le plus léger a tendance à se rassembler vers le centre du séparateur et le fluide le plus lourd vers l'extérieur. Cette séparation étant faite par l'association des organes situés à l'amont et de la chambre de séparation, il ne reste qu'à prélever de manière symétrique par rapport à l'axe, les flux des deux espèces. En ajustant la pression aval dans la conduite 115, par exemple au moyen d'une vanne, on peut modifier le débit de la phase lourde qui passe au moins en partie au travers de la couronne 110. De même, en ajustant la pression à l'aval de la pièce cylindrique P2, on modifie le débit passant dans la couronne 111 au travers de laquelle passe tout ou partie du fluide léger. Lorsque les conditions d'alimentation de l'appareil sont constantes, on conçoit qu'il est possible de faire en sorte que la totalité de la phase légère passe dans la couronne 111 et que le débit de phase lourde passe dans la couronne 110.

La pièce centrale P3 revêt la forme d'un cylindre plein dont l'extrémité située du côté de la chambre de séparation 100 est sensiblement perpendiculaire à l'axe de cette chambre et constitue un fond plat. L'autre extrémité du cylindre plein se prolonge par une partie conique. La pièce centrale P3 est de longueur axiale inférieure à celle de la pièce cylindrique P2. Au moins deux ailettes 117 sont fixées sur la pièce centrale, généralement sur sa partie conique.

Le fluide léger est éliminé suivant les flèches 113 et le fluide lourd suivant les flèches 112 puis 107.

Ainsi, le fluide situé à l'intérieur du diamètre $D_3$ extérieur de la pièce centrale P3 soutenue par les ailettes 117 tourne en rotation solide et se mélange donc un peu au flux du fluide le plus léger. Il peut en résulter de légères perturbations, surtout si le débit de fluide léger est faible La ligne de séparation entre les écoulements de fluide lourd et léger se positionne automatiquement sur l'extrémité 102, de préférence effilée, qui constitue une lèvre de prélèvement circulaire dont l'épaisseur e est toujours très faible.

A titre de dimensionnement illustratif, on peut envisager un diamètre $D_0$ de 100 mm, un diamètre $D_1$ de 70 mm, un diamètre $D_2$ de 60 mm et un diamètre $D_3$ de 50 mm. L'épaisseur e de la lèvre de prélèvement 102 peut être de 2 mm.

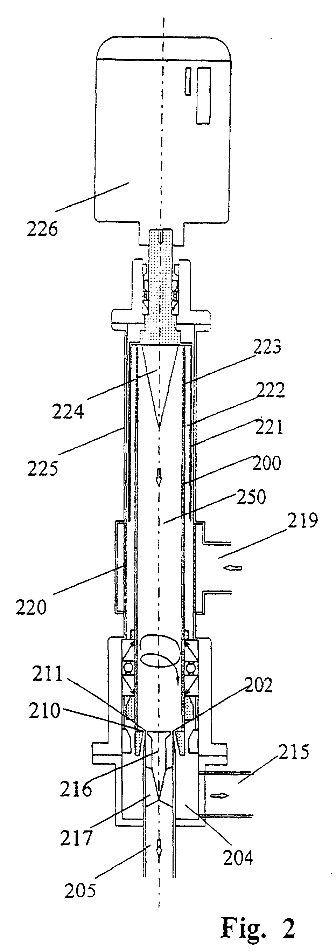

Sur la figure 2, on a représenté la chambre de séparation 250 tournant dans une enveloppe fixe 225 et entraînée par un moteur 226. Une virole 221 solidaire de la chambre de séparation 250 s'étend sur une partie de cette chambre, depuis son entrée, et l'entoure en laissant subsister un jeu annulaire 222. Cette virole 221 est donc entourée par l'enveloppe 225 dont elle est séparée par un espace annulaire. La chambre de séparation 250 est libre en rotation par rapport à l'enveloppe 225. Cette dernière a une forme sensiblement cylindrique, elle s'étend au-delà de la virole 221 le long de l'axe de la chambre de séparation 250 et est munie de perforations 220

Le mélange est introduit en 219 au travers des perforations 220, entre la chambre de séparation 250 et l'enveloppe 225. Il pénètre ensuite dans le jeu annulaire 222 ménagé entre la paroi 200 de la chambre de séparation 250 et la virole 221 tournante. Dans ce jeu annulaire, le mélange est mis progressivement en rotation par friction.

Lorsque le mélange arrive au droit des perforations radiales 223 présentes à l'entrée de la chambre de séparation 250, sa vitesse angulaire est pratiquement égale à celle du corps du séparateur.

Ceci permet d'introduire le mélange dans la partie interne de la chambre de séparation 250 sans choc au travers des perforations radiales 223, ces perforations ayant préférablement une longueur plusieurs fois supérieure à leur diamètre. La surface cumulée des perforations est suffisamment importante pour que la vitesse d'entrée dans la chambre soit faible, par exemple 10 fois inférieure à la vitesse périphérique, de telle sorte que la vitesse angulaire du mélange à l'entrée soit exactement égale à celle de la partie tournante. L'entrée de la chambre de séparation est avantageusement munie d'une partie conique ou ogive 224 coaxiale avec la chambre de séparation et fixée à cette dernière, ce qui permet de guider le mélange lors de son introduction dans la chambre.

Avec une entrée de ce type, la vitesse tangentielle du mélange dans la chambre tournante est pratiquement inversement proportionnelle au rayon. Elle s'accroît donc très fortement à mesure qu'on se rapproche du centre.

Ceci conduit à des accélérations centripètes très importantes qui sont favorables à la séparation des phases. Pendant son trajet dans la chambre tournante, le mélange se sépare en deux tubes de courant, l'un contenant les phases lourdes et l'autre les phases légères.

L'efficacité de la séparation dépend de la granulométrie moyenne du mélange selon des lois connues de l'homme de l'art, et, tout particulièrement, la loi de Stokes. Ce mélange transporté est alors aspiré à la sortie de la chambre comme indiqué dans la description de la figure 1.

La phase lourde passe dans la couronne 210 et la phase légère dans la couronne 211. La phase lourde est ensuite éliminée au travers de la chambre de recueil 204 puis de la conduite d'évacuation 215. La phase légère passe dans la couronne 211 puis est évacuée au travers de la tuyauterie 205. La pièce centrale est constituée par l'ogive 216 qui limite la couronne 211 et est maintenue par les ailettes 217. Il convient de noter que, du côté de la chambre de séparation 250, la partie cylindrique comportant la lèvre de prélèvement 202 et l'ogive 216 ne sont pas tournantes dans cet exemple, ce qui simplifie la construction de l'appareil.

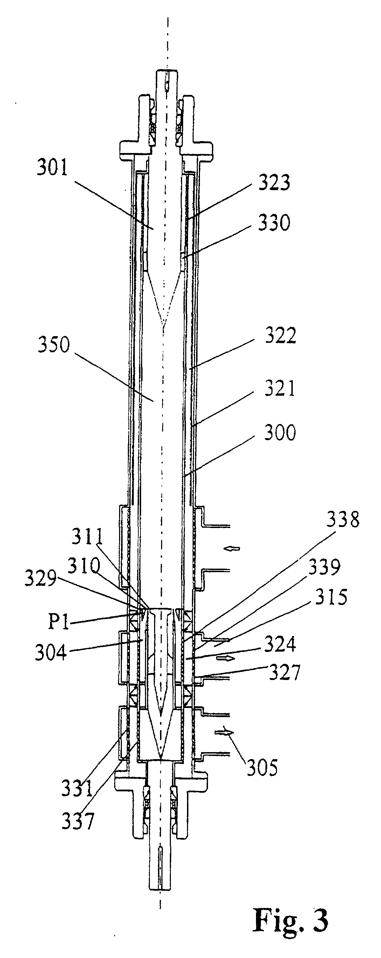

La figure 3 donne un autre mode de réalisation du dispositif L'écoulement général va de haut en bas sur la figure. La mise en rotation se fait, comme dans le cas précédent, dans un séparateur tournant alimenté au moyen de canaux axiaux parallèles 330 formés par des ailettes situées entre la paroi 300 de la chambre de séparation 350 et l'ogive 301.

Le mélange est lancé au moyen du système de lancement par friction constitué par le jeu annulaire 322 formé entre la paroi 300 et la virole 321, puis il passe à travers les perforations 323 et les canaux 330 avant d'aborder la chambre de séparation tournante proprement dite 350. Il sort ensuite par les couronnes de sortie 310 et 311. Dans cette réalisation, la chambre de recueil 304 est solidaire en rotation avec la chambre de séparation 350 et munie d'orifices 338 débouchant dans une chambre intermédiaire 324 dont une paroi 327 libre en rotation par rapport à la chambre de séparation 350 comprend une grille 339 débouchant dans la conduite d'évacuation 315.

Des orifices 329 sont prévus à la sortie de la chambre de séparation 350, dans la pièce annulaire périphérique P1, de préférence à proximité de la paroi 300, pour évacuer une partie du débit de fluide lourd qui peut ainsi entraîner des particules solides plus denses que lui. Le liquide lourd ainsi chargé de solides est ensuite évacué au travers de la grille tournante perforée par les orifices 338, puis de la grille fixe 339 et enfin de la tuyauterie 315.

A titre d'exemple, pour un séparateur de 100 mm de diamètre, on peut envisager la mise en place de 6 tubes d'évacuation de solides de 3 mm de diamètre. L'évacuation d'huile se fait, dans ce cas, au travers de la grille tournante 337 solidaire de la chambre de séparation 350, de la grille fixe 331 (libre en rotation par rapport à la chambre de séparation 350) et de la tuyauterie 305.

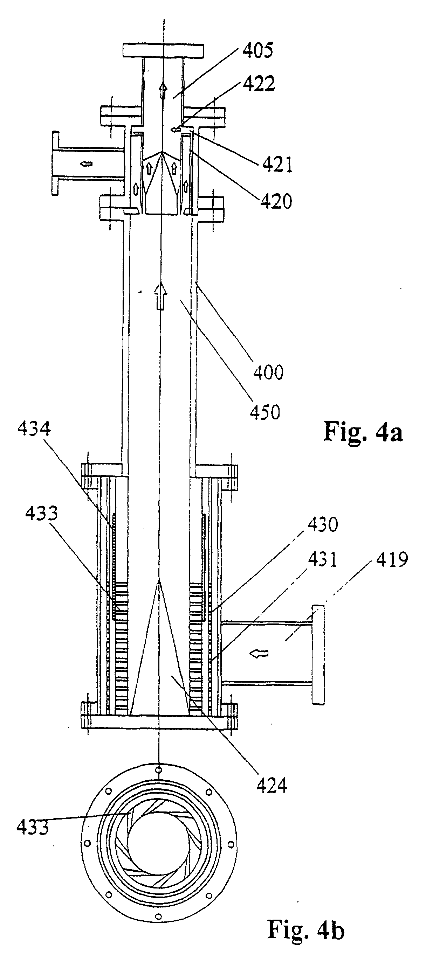

Sur les figures 4a et 4b, le séparateur est fixe. Il est alimenté en émulsion au travers de la tuyauterie 419, puis de la grille ou virole de répartition 431 munie d'orifices 430. L'émulsion pénètre ensuite dans la chambre de séparation fixe 450 limitée par la paroi 400 au travers d'une pluralité de perforations 433 qui sont des petits canaux convergents 433 débouchant tangentiellement dans la chambre de séparation 450, dont le rôle est d'accélérer progressivement la vitesse de l'émulsion pour minimiser les chocs à l'entrée du séparateur.

Dans la réalisation proposée, ces canaux sont au nombre de 112, répartis en 14 rangées de 8 canaux. Cette disposition permet d'introduire l'émulsion de manière très homogène et symétrique par rapport à l'axe de la chambre de séparation 450. En variante, on peut utiliser un ensemble de fentes, ou même des orifices cylindriques tangentiels forés dans la paroi 400 du séparateur. On met en place une ogive stabilisatrice 424 de forme conique.

L'appareil est, en outre, muni d'un obturateur cylindrique 434 déplaçable par rapport à la chambre 450, dont la commande n'est pas représentée, et qui est disposé de façon à permettre l'obstruction de tout ou partie des perforations d'entrée 433 afin de faire varier leur surface totale. On peut ainsi modifier à la demande le débit passant dans l'appareil et, surtout, adapter la vitesse d'entrée dans le séparateur en sortie des canaux 433 au débit passant dans l'appareil, l'une des règles à appliquer pouvant être que cette vitesse soit constante lorsque le débit varie pour une émulsion de caractéristiques données. Cette caractéristique présente des avantages très importants par rapport aux cyclones conventionnels non réglables.

Sur la figure 4a, la sortie est du type décrit sur la figure 1, à la différence près que l'on fait passer une partie du débit d'eau dans les canaux périphériques tubulaires 420 qui alimentent la chambre 421 puis la sortie d'huile 405 selon les flèches 422. Ce débit d'eau entraîne un débit de solides qui risqueraient autrement de rester collés contre la paroi externe du séparateur 400 et obstrueraient peu à peu le passage des fluides.

Dans l'exemple choisi, les dimensions de la chambre de séparation sont de 400 mm de longueur, 50 mm de diamètre. La surface de sortie de chacune des 112 canaux d'entrée tangentielle est un carré de 2.5 mm de diamètre. Le débit nominal de l'appareil est de 5 l/s d'émulsion lorsque tous les canaux sont ouverts et le débit minimal est d'environ 1 l/s. La plage du coefficient $\xi$ utilisée est de 0.1 à 0.4 environ. Les diamètres caractéristiques $D_0$, $D_1$, $D_2$ et $D_3$ sont respectivement de 50 mm, 35 mm, 30 mm et 25 mm. Ce dimensionnement doit permettre de séparer toute goutte de diamètre inférieur à 100 microns dans une émulsion présentant une différence de masse volumique entre les phases égale à 150 kg/m$^3$.

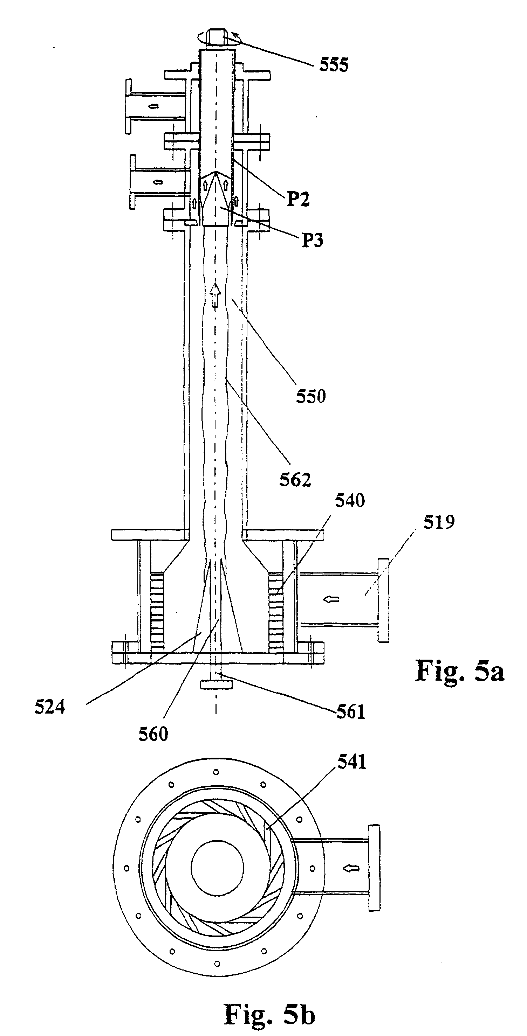

La figure 5 présente un dispositif fixe alimenté par de multiples perforations 541 qui sont des canaux tangentiels 541 percés au niveau de l'entrée de la chambre de séparation 550, dans la virole d'entrée 540, dont le diamètre est supérieur à celui du reste de la chambre de séparation 550. Cette caractéristique permet d'obtenir une même intensité de rotation dans la chambre de séparation en limitant les vitesses d'entrée et donc l'émulsification du fluide. Le nombre d'orifices peut être réglable, mais cette possibilité n'a pas été représentée sur cette figure. La sortie d'huile se fait à l'intérieur de la pièce cylindrique P2. En agissant sur la vis 555, on déplace axialement la pièce cylindrique P2 par rapport à la pièce centrale P3. Grâce à l'extrémité effilée de la pièce cylindrique P2, on peut alors modifier aisément les largeurs des couronnes de sortie et, en particulier celle de la couronne de sortie d'eau pour adapter les pertes de charge.

De plus. sur cette configuration ont été ajoutés, au niveau de l'entrée de la chambre de séparation 550, des moyens d'introduction ou de soutirage d'un gaz, de préférence au niveau de l'axe de la chambre de séparation 550. Ces moyens sont constitués par une tuyauterie 560 coaxiale avec la chambre de séparation 550 et traversant l'ogive stabilisatrice 524. Le gaz présent en excès dans l'émulsion est séparé par l'effet centrifuge et une surface libre 562 se crée dans l'appareil. Cette surface libre permet de limiter l'extension de la zone de liquide en rotation solide et donc les frottements et la turbulence. Dans le cas de gaz naturellement présent dans l'émulsion, il convient de lettre en place une sortie 561, préférablement axiale pour extraire ce gaz en excès. Dans le cas d'une émulsion non chargée en gaz, on pourra ajouter une faible quantité de gaz à l'entrée de l'appareil afin de créer la surface libre 562 et ainsi éviter les frottements. Pour donner un ordre de grandeur, on peut admettre un débit volumique de gaz égal à 1% du débit total rentrant dans l'appareil. Ce gaz se retrouve intégralement dans la sortie de fluide léger.

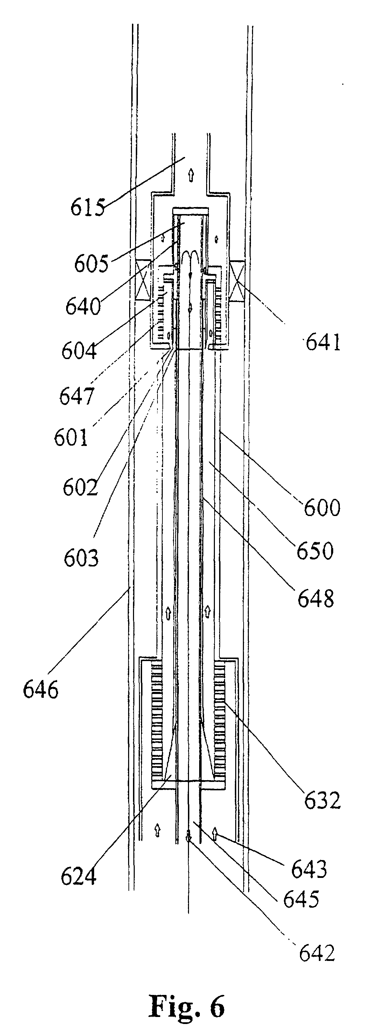

La figure 6 présente un dispositif fixe muni d'une injection de gaz ou d'air destinée à réduire les frottements.

La pièce centrale servant à limiter le second orifice annulaire présente sensiblement la forme d'une cylindre creux 645, coaxial avec la chambre de séparation 650 et s'étendant de l'entrée à la sortie de cette dernière. Ce cylindre 645 est, au niveau de la sortie de la chambre de séparation 650, apte à récupérer le fluide léger en vue de son évacuation, par exemple grâce à une grille 640 à travers laquelle peut passer le fluide léger, l'extrémité voisine du cylindre 645 étant alors obstruée.

Ce dispositif est destiné à effectuer une séparation de phases dans un puits de pétrole. Le mélange entre dans le séparateur au travers de la tuyauterie 644 selon les flèches 643. Il passe ensuite dans des perforations ou aubages à accélération progressive 632, puis dans le séparateur proprement dit 650 dont la paroi extérieure 600 ne tourne pas. Le cylindre 645 s'entoure alors d'une gaine de gaz.

Les couronnes de sortie limitées par les cercles 601,602 et 603 sont analogues à celles de la figure 1. Le liquide lourd, l'eau dans ce cas, passe dans la chambre 604, puis dans la conduite d'évacuation 615 après avoir traversé la grille 647. L'huile entre dans la chambre 605 après être passée dans la couronne d'aspiration. Elle traverse la grille 640 et revient en arrière au travers du cylindre 645 qui rejoint l'ogive 624 et sort suivant la flèche 642. Ce cylindre est gainé de gaz, le cylindre de gaz 648 étant très proche de sa paroi extérieure. Si besoin, il est nécessaire d'injecter un débit de gaz artificiel qui permet de créer cette gaine. L'ensemble est mis en place dans un tube de pétrole 646, l'étanchéité nécessaire entre le flux de mélange et la sortie d'eau se faisant avec un joint 641. Bien entendu, si besoin, le cylindre 645 d'évacuation d'huile peut se trouver du même côté que la tuyauterie d'évacuation d'eau, mais cette forme de réalisation n'a pas été représentée.

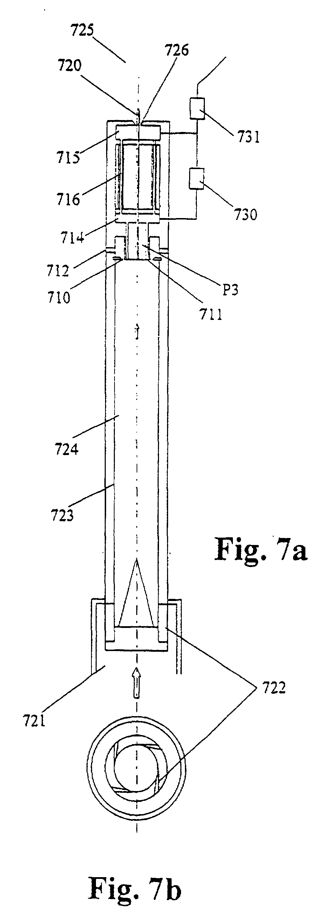

La figure 7 illustre un dispositif selon l'invention muni de moyens pour détecter ou mesurer la présence de liquide léger en faibles quantités dans le liquide lourd.

L'émulsion pénètre en 721, puis au travers des entrées tangentielles 722 dans la chambre de séparation 724 limitée par la paroi 723. Le liquide lourd ressort de la chambre de séparation à travers le premier orifice annulaire ou couronne 710, puis des orifices calibrés 712 qui fixent le débit de fluide principal. Le liquide léger sort de la chambre à travers le second orifice annulaire ou couronne 711.

L'orifice 711 débouche dans une première chambre de mesure 714 communiquant au moyen de tubes capillaires 716 avec une seconde chambre de mesure 715 pourvue d'un orifice 726. Un premier capteur de pression différentielle 730 est disposé entre les première et seconde chambres de mesure 715 et 716. Un second capteur de pression différentielle 731 est disposé entre la seconde chambre de mesure et le milieu 725 dans lequel débouche l'orifice 726.

Le liquide lourd, après être passé par la couronne 711, pénètre dans la chambre 714 puis dans une pluralité de tubes capillaires 716 et s'introduit dans la chambre 715. Il est évacué dans le milieu 725 au travers de l'orifice calibré 726. Avantageusement, on prend soin de disposer dans la pièce centrale, un tube central d'évacuation de gaz 720 si le fluide est susceptible de contenir du gaz. Le principe de la méthode de détection consiste à mesurer au moyen des capteurs de pression différentielle 730 et 731 les pertes de charge des capillaires 716 et de l'orifice 726. Les capillaires 716 sont suffisamment longs et de petit diamètre pour que s'établisse un écoulement laminaire, caractérisé par un nombre de Reynolds inférieur à 1000, dans lequel la perte de charge est proportionnelle au débit de fluide et à sa viscosité. L'orifice 726 est, quant à lui, de faible longueur, si bien que sa perte de charge est proportionnelle au carré du débit et à la masse volumique du fluide qui le traverse. Lorsque le fluide est visqueux, la perte de charge dans les tubes capillaires sera proportionnellement plus importante que celle de l'orifice 726 que lorsque le fluide est moins visqueux. La mesure de la perte de charge $\Delta p_2$ de l'orifice de sortie 726 de section S permet de déterminer le débit Q de fluide de densité $\rho$ donné par :

$$Q = \sqrt{\frac{2\Delta p_2}{\rho}}$$

La mesure de la perte de charge $\Delta p_1$ aux bornes de la pluralité de N tubes capillaires de diamètre D donne la viscosité $\mu$ du fluide par application de la formule :

$$\mu = \frac{\pi D^4 \Delta p_1}{128 L \frac{Q}{N}}$$

En général, les différences de densité entre les fluides sont suffisantes pour que l'on puisse ainsi concentrer la phase liquide légère et en déterminer la viscosité afin de savoir ainsi s'il existe des traces de fluide léger dans l'émulsion pénétrant dans le séparateur.

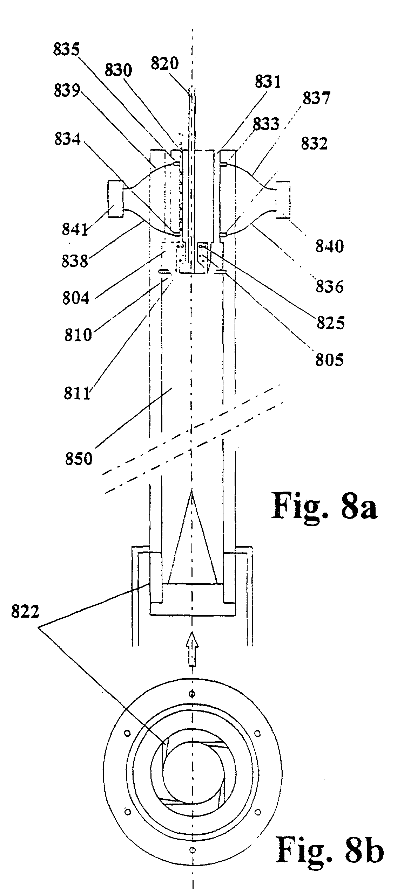

Les figures 8a et 8b représentent un autre dispositif selon l'invention qui permet de détecter ou mesurer la présence de liquide léger dans un fluide lourd selon une autre méthode consistant à augmenter la concentration $C_e$ initiale de liquide léger en faisant passer le mélange dans un séparateur

Cette méthode utilise à nouveau un séparateur cyclonique tournant ou non représenté sur les figures 8a et 8b. Dans ces conditions, le liquide sortant au travers du second orifice annulaire ou couronne centrale 811 destinée au liquide léger contient une quantité de liquide léger supérieure à celle du liquide lourd sortant au travers du premier orifice annulaire ou couronne externe 810. La concentration $C_s$ correspondante est égale au produit de la concentration initiale $C_e$ par l'efficacité de séparation du séparateur $\eta$ et par le rapport du débit total entrant dans le séparateur Q au débit q extrait par la sortie de liquide léger.

$$C_s = \eta C_e \frac{Q}{q}$$

On utilise alors des appareils de mesure plus traditionnels capables de mesurer la présence de faibles quantités de fluide léger et non plus seulement de traces.

Les figures 8a et 8b donnent un exemple d'un tel dispositif basé sur une mesure de résistivité. Le liquide entre dans le séparateur au travers des fentes 822, passe dans la chambre de séparation 850, puis en ressort au travers des couronnes 810 et 811.

Le fluide lourd, dont le débit est prépondérant, passe dans la couronne 810, puis dans la chambre 804 et est évacué dans le milieu extérieur au travers d'une pluralité de tuyauteries calibrées 831 dont au moins une est munie d'un appareil de mesure.

Le fluide léger, constitué d'un mélange de fluide lourd et de fluide léger sous forme de gouttelettes 825 dont la concentration est égale à $C_s$ passe, quant à lui, au travers de la couronne 811, puis dans la chambre 805 et dans la tuyauterie également calibrée 830 débouchant dans le milieu extérieur.

Le fait de disposer de tuyauteries calibrées permet de conserver un rapport de débit constant entre les deux flux de sortie. Le gaz éventuellement présent est évacué au travers du tube central 820.

Dans l'une des tuyauteries 831 calibrées, sont disposées deux sondes 832 et 833, l'une (832) en un point proche de la chambre 804 et l'autre (833) en un point proche de l'extérieur. Ces sondes 832 et 833 sont reliées à un appareil de mesure de résistance 840 par les conducteurs électriques 836 et 837.

De même, deux sondes 834 et 835 sont disposées dans la tuyauterie 830, l'une (834) en un point proche de la chambre 805 et l'autre (835) en un point proche de l'extérieur. Ces sondes 834 et 835 sont reliées à un autre appareil de mesure de résistance 841 par l'intermédiaire des conducteurs 838 et 839.

Le fluide passant dans la tuyauterie 830 ayant une concentration en fluide léger supposé non conducteur supérieure à celle du fluide passant dans la tuyauterie 831 a une résistivité plus élevée qui est une fonction de cette concentration. On déduit donc de cette mesure, après étalonnage préalable, la concentration en fluide léger du fluide passant dans la tuyauterie 830. Connaissant le rapport des débits de sortie, on peut calculer la concentration dans le liquide entrant dans le séparateur. La mesure de résistance est donnée à titre d'exemple. L'homme de l'art pourra choisir d'autres méthodes éventuellement mieux adaptées, telles les méthodes capacitives ou par absorption de rayonnements électromagnétiques. En général, on réalise des mesures différentielles car elles sont plus précises que les mesures directes. Cette méthode est, en particulier, utilisable en fond de puits de pétrole.

A titre d'exemple, on peut mettre en oeuvre une séparateur de 20 mm de diamètre et de 200 mm de long, tournant ou non. Le débit de fluide à analyser sera de 0.4 litre par seconde et le débit extrait par la sortie de liquide léger de 4 millilitres par seconde.

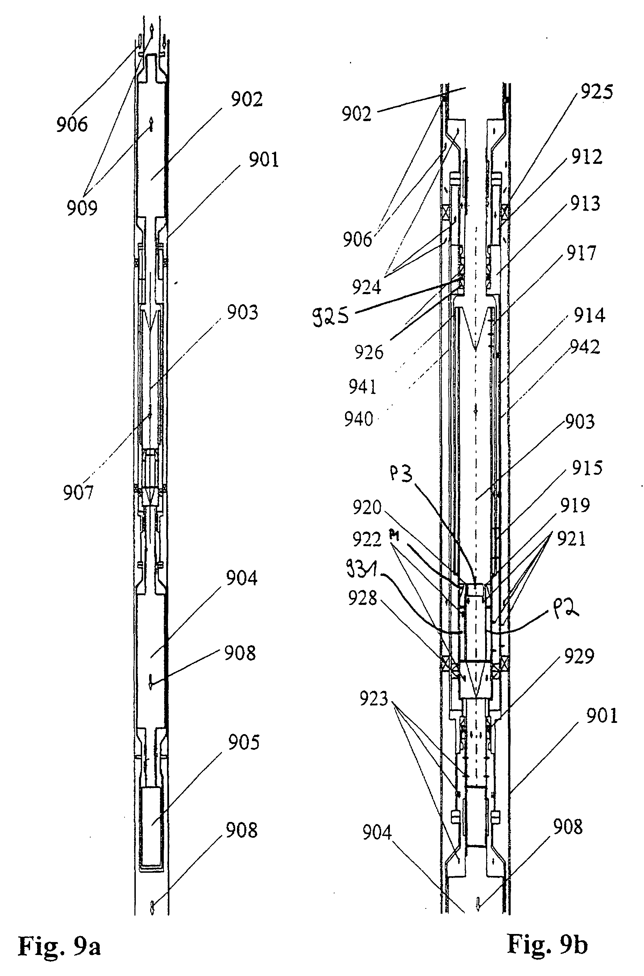

Les figures 9a et 9b représentent un autre variante du dispositif selon l'invention qui présente un grand intérêt lors de l'exploitation d'un puits de pétrole.

En effet, lors de leur exploitation, les puits de pétrole produisent des émulsions de plus en plus riches en eau. Avec les techniques traditionnelles de production, cette eau est évacuée en tête de puits avec le pétrole produit. Elle doit être ensuite séparée dans des installations à terre puis réintroduite dans le sol, à des profondeurs différentes de la nappe contenant du pétrole.

Ces techniques consistent donc à mettre en oeuvre des cyclones fixes dont les performances en séparation sont médiocres, les débits limités et qui n'admettent pas de variations importantes du débit de production. Ceci oblige à utiliser, sur les puits les plus productifs, jusqu'à une vingtaine d'appareils en parallèle, chacun d'eux pouvant être associé à un cyclone de finition. Par exemple, dans le cas d'un puits produisant 20 000 barils par jour (BPD), il faut envisager la mise en oeuvre d'un ensemble de cyclones pouvant atteindre 40 appareils

Il s'ensuit une très grande complexité des arrangements de tuyauteries et par conséquent, des coûts d'investissement et de fonctionnement très élevés.

Le dispositif des figures 9a et 9b permet de résoudre ces problèmes en séparant le pétrole et l'eau en fond de puits, puis en réintroduisant l'eau dans une formation géologique adaptée en la faisant de préférence passer dans une pompe. Le pétrole, qui peut encore contenir une certaine quantité d'eau, est alors transporté vers la surface naturellement ou au travers d'une pompe, selon que le puits est ou non éruptif.

Il fait donc appel à des séparateurs de faible diamètre, mais ayant des performances suffisantes en séparation pour s'assurer que l'eau réinjectée ne contient plus que de très faibles quantités de pétrole, par exemple inférieures à 300 mg/l.

Comme on peut le voir sur les figures 9a et 9b, le séparateur est placé entre un étage de pompe à huile et un étage de pompe à eau dans un puits de pétrole, le moteur d'entraînement de l'ensemble de ces machines tournantes étant situé à l'extrémité inférieure de la pompe à eau. Le mélange est introduit par la partie supérieure de l'appareil, l'eau étant rejetée en partie inférieure et introduite dans la pompe à eau, l'huile étant également rejetée en partie inférieure et reconduite vers le haut au travers d'une tuyauterie située entre la virole externe du séparateur et le tube du puits de production.

En se reportant à la figure 9a en particulier, on voit qu'un tube extérieur 901 qui délimite les parois du puits, dans lequel sont installés sur une même ligne d'arbre entraîné par un moteur 905, une pompe à huile 902, une chambre de séparation tournante 903 et une pompe à eau 904. Le mélange à séparer pénètre dans le dispositif par le haut selon les flèches 906, descend dans le jeu ménagé entre le corps de la pompe à huile 902 et le tube 901, pénètre à la partie supérieure de la chambre de séparation 903, poursuit son trajet vers le bas dans cette chambre de séparation selon la flèche 907. Le mélange est séparé dans cette zone sous l'effet des forces centrifuges, l'eau étant évacuée à la partie inférieure de la chambre de séparation 903 et pénètre dans la pompe à eau 904, puis vers une formation géologique située en dessous de l'ensemble du dispositif selon la flèche 908.

L'huile est également extraite à la partie inférieure de la chambre de séparation tournante 903 et recueillie dans la chambre de recueil 931, mais elle remonte ensuite vers le haut avant de pénétrer dans la pompe 902 et d'être évacuée vers la surface selon les flèches 909 (fig. 9a) dans une tuyauterie prévue à cet effet.

Sur la figure 9b, on trouve plus de détails des circuits de fluides dans la zone de séparation. Le mélange rentre dans la zone de séparation selon les flèches 906. Il passe tout d'abord dans un distributeur cloisonné fixe 912 qui permet son croisement avec le flux d'huile extrait à la sortie la chambre de séparation 903, sans que les deux fluides se mélangent, grâce à une disposition appropriée des cloisons du distributeur 912. Il pénètre ensuite dans le distributeur à ailettes 913, puis dans le jeu 914 ménagé entre la virole fixe externe 940 du séparateur et une première virole tournante 941. Dans ce jeu annulaire, le mélange subit une première mise en rotation par friction sur la paroi tournante. Il passe ensuite dans la grille 915 située à proximité de la sortie de la chambre de séparation 903 et perforée de lumières allongées dans le sens perpendiculaire à l'axe de la chambre 903 puis revient vers l'entrée de la chambre 903 entre la virole 941 et la virole 942 qui sont toutes deux tournantes. Le mélange est donc lancé par friction en rotation dans ce jeu entre les viroles pendant son parcours.

Il est ensuite introduit dans la chambre de séparation tournante 903 au travers d'une pluralité d'orifices radiaux 917 situés à l'entrée de cette chambre, ces orifices associés à cette procédure de lancement, permettant d'alimenter la chambre interne du séparateur avec une vitesse tangentielle à l'entrée exactement égale à la vitesse tangentielle périphérique du séparateur tournant. Dans cette chambre tournante se crée un écoulement cyclonique caractérisé par une accélération de la vitesse tangentielle vers l'axe de l'appareil. Les conditions d'accélération qui y règnent sont telles que le fluide léger tend à aller vers le centre et le fluide lourd à rester en périphérie. Lorsqu'on atteint la sortie de l'appareil, les deux flux de fluide léger et lourd sont séparés et on les extrait au travers d'orifices 919 et 920, l'orifice ou couronne d'extraction 919 étant situé à l'extérieur de l'orifice ou couronne 920, l'eau, plus dense, passant dans la couronne 919 et l'huile, qui contient généralement encore un peu d'eau, passant dans la couronne 920. L'huile extraite passe ensuite, selon les flèches 921, dans le jeu annulaire situé entre la virole externe fixe 940 du séparateur et le tube 901 limitant le puits. Elle est ensuite envoyée vers la pompe 902 en suivant les flèches 924 vers l'extérieur du puits et en passe en particulier au travers du distributeur cloisonné fixe 912, point où elle croise le flux de mélange se dirigeant vers la chambre de séparation. L'eau est, quant à elle, évacuée au travers de la couronne 919 et envoyée selon les flèches 922, puis 923 vers la pompe 904 et vers la formation géologique où elle est réinjectée selon les flèches 908.

L'ensemble tournant formé de la pompe à huile 902, de la chambre de séparation 903, de la pompe à eau 904, de la chambre de recueil 931, des viroles 941,942 et des pièces P1, P2 et P3 est supporté par les roulements 925 et 929, protégés par les garnitures mécaniques 926 et 928. Il a donc l'avantage d'être aligné et est entraîné par des moyens d'entraînement en rotation, en l'occurence, le moteur 905. Le dispositif selon l'invention peut alors présenter un faible diamètre et être dimensionné de telle sorte qu'il puisse être installé à l'intérieur du tube 901 constituant la paroi du puits.

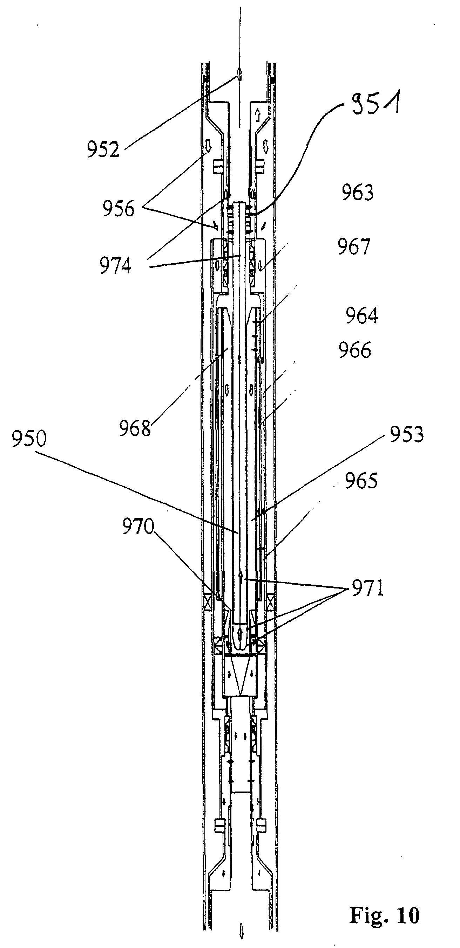

La figure 10 représente une variante du dispositif des figures 9a et 9b dans laquelle l'extraction de pétrole se fait au travers d'une tuyauterie axiale 950. L'alimentation en émulsion est plus simple que la précédente, puisqu'il n'est pas nécessaire de mettre en oeuvre un courant croisé de l'huile et de l'émulsion. Celle-ci est en effet introduite dans le séparateur 953 selon les flèches 956. Elle passe ensuite successivement en 963, 964, 965 et 966 comme dans l'exemple des figures 9a et 9b. L'alimentation du séparateur tournant 968 s'effectue au travers des orifices radiaux 967. L'extraction de l'eau se fait de manière analogue à la description précédente l'extraction de l'huile se fait par l'intérieur de la tuyauterie axiale 950. Le trajet de l'huile suit les flèches 971. Elle passe d'abord au travers de l'orifice 970, puis revient en arrière pour pénétrer dans la tuyauterie 950. L'huile est extraite de cette tuyauterie au travers des orifices radiaux 951, puis est injectée dans la pompe 952 selon les flèches 974.

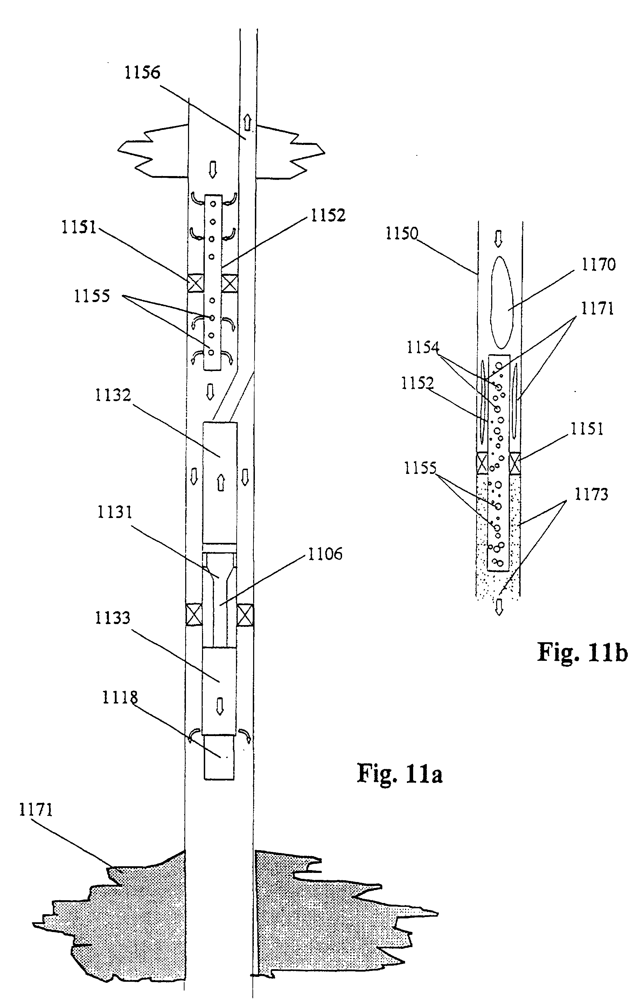

Les figures 11a et 11b donnent un exemple d'implantation du dispositif selon l'invention dans un champ pétrolier. Le mélange dont on veut séparer les phases est préalablement homogénéisé pour éviter des fluctuations de la concentration relative des divers éléments, gaz, huile et eau en particulier dans le cas d'un forage pétrolier. Ces fluctuations peuvent en particulier provenir de la formation d'écoulements diphasiques de type "à bouchons" (*slug flows*). Si elles se produisent, elles imposent de dimensionner l'appareillage pour les conditions de concentration extrêmes. La solution consiste donc à mettre en place un mélangeur. Selon l'invention, ce mélangeur comprend une conduite 1152 aux deux extrémités ouvertes, coaxiale avec la chambre de séparation 1106 du dispositif de séparation selon l'invention 1131 et formée de deux tubes perforés montés bout-à-bout et dont le volume d'au moins l'un d'entre eux est du même ordre de grandeur que celui correspondant au débit passant entre deux fluctuations de concentration en l'une des espèces de plus basse fréquence, par exemple les plus gros bouchons. Ces tubes communiquent l'un avec l'autre et comportent des orifices multiples répartis dans le sens de la longueur. Dans l'exemple représenté sur les figures 11a et 11b, le mélangeur 1152 est placé avant l'ensemble de séparation et pompage formé du moteur 1118, de la pompe à eau 1133, du dispositif de séparation selon l'invention 1131 et de la pompe à pétrole 1132, le pétrole étant évacué vers la surface dans la tuyauterie 1156 communiquant avec le tube central du dispositif selon l'invention, l'eau quittant le tube tournant du dispositif selon l'invention et étant évacuée, via la chambre d'évacuation 1115, dans la formation 1171 située à une altitude inférieure.

Le fonctionnement du mélangeur est illustré sur la figure 11b dans laquelle on représente un bouchon de fluide 1170 qui pénètre dans un premier étage du mélangeur formé d'une conduite 1152 allongée dans le sens de la tuyauterie principale 1150, percée d'une pluralité d'orifices d'entrée 1154 et de sortie 1155. Les orifices d'entrée 1154 se situent dans ledit premier étage. Des moyens de séparation 1151 définissent un second étage dans lequel se trouvent les orifices de sortie 1155 Les orifices d'entrée 1154 et de sortie 1155 sont préférablement répartis équitablement dans le sens de la longueur de cette conduite allongée 1152, de telle sorte que le bouchon de fluide se dirige en partie vers l'intérieur de cette conduite au travers des orifices d'entrée 1154 et en partie à l'extérieur de cette conduite dans le jeu annulaire 1171 formé entre la conduite 1152 et le tube constituant la paroi du puits. Le résultat est que le bouchon 1170 a tendance à se mélanger avec le fluide contenu dans la conduite 1152, ce qui tend à homogénéiser les concentrations et à créer des globules de plus petites dimensions. Le fluide ainsi prémélangé ressort au travers des orifices 1155 qui sont calibrés de telle sorte que l'émulsion produite est formées de globules 1173 suffisamment petits pour éviter la formation d'un nouveau bouchon avant l'entrée dans la séparateur 1131. Le dimensionnement de ces orifices se fait par exemple par application des équations de Hinze et Kolmogorov relatives aux mélanges turbulents.

**Revendications**

1. Dispositif pour la séparation des constituants d'un mélange hétérogène, ce dispositif comprenant une chambre de séparation (100,250,350,450,550, 650,724, 850,903,1106) ayant à l'une de ses extrémités une entrée et à l'autre de ses extrémités une sortie comportant un premier orifice annulaire (110,210,310,410,510,610,710,810,919) coaxial avec ladite chambre, et un second orifice annulaire (111,211,311,411,511,611,711,811,920) coaxial avec ledit premier orifice annulaire et dont le diamètre extérieur est inférieur au diamètre intérieur dudit premier orifice annulaire, **caractérisé en ce que** ladite chambre de séparation présente une forme cylindrique, **en ce que** le diamètre extérieur $D_1$ dudit premier orifice annulaire est inférieur au diamètre intérieur $D_0$ de ladite chambre, et **en ce que** la sortie de la chambre de séparation (100,250,350, 450,550,650,724,850,903, 1106) présente :

   - une pièce annulaire périphérique (P1), s'étendant depuis la paroi de la chambre de séparation (100,250,350,450,550,650,724,850, 903,1106) vers l'axe de cette chambre (100,250,350,450,550,650,724,850,903,1106),
   - une pièce sensiblement cylindrique (P2),
   - une pièce centrale (P3,645) ayant une section transversale circulaire,
   - la pièce sensiblement cylindrique (P2) étant disposée entre la pièce annulaire périphérique (P1) et la pièce centrale (P3,645), et les trois pièces (P1;P2;P3,645) étant coaxiales avec la chambre de séparation (100,250,350,450,550, 650,724,850,903,1106), de façon à ce que

      * le premier orifice annulaire (110,210,310, 410,510,610,710,810,919) soit constitué par l'espace entre la pièce annulaire périphérique (P1) et la pièce sensiblement cylindrique (P2), et
      * le second orifice annulaire (111,211,311, 411,511,611,711,811,920) soit constitué par l'espace entre la pièce sensiblement cylindrique (P2) et la pièce centrale (P3,645).

2. Dispositif selon la revendication 1, **caractérisé en ce que** le diamètre extérieur du second orifice annulaire (111,211,311,411,511,611,711,811,920) est supérieur à 0,3 fois le diamètre intérieur $D_0$ de la chambre de séparation (100,250,350,450,550, 650,724,850,903,1106).

3. Dispositif selon la revendication 1 ou la revendication 2, **caractérisé en ce que** le diamètre extérieur $D_1$ du permier orifice annulaire (110,210,310, 410,510,610,710,810,919) est supérieur à 0,4 fois le diamètre intérieur $D_0$ de la chambre de séparation (100,250,350,450,550,650,724,850,903, 1106).

4. Dispositif selon l'une quelconque des revendications 1 à 3, **caractérisé en ce que** le premier orifice annulaire (110,210,310,410,510,610) débouche dans une chambre de recueil (104,204,304,604) communiquant avec une conduite d'évacuation (115,215,315,615).

5. Dispositif selon l'une quelconque des revendications précédentes, **caractérisé en ce que** l'entrée de la chambre de séparation (250,350,450, 550,650) comprend, dans sa paroi (200,300, 400,600), des perforations (223,323,433,541,632) permettant l'introduction du mélange.

6. Dispositif selon l'une quelconque des revendications précédentes, **caractérisé en ce que** la chambre de séparation (250,350,450,550,650) est munie à son entrée d'une partie conique ou ogive (224,424,524,624) coaxiale avec la chambre de séparation (100,250,350,450,550,650) et fixée à cette dernière.

7. Dispositif selon l'une quelconque des revendications précédentes, **caractérisé en ce qu'il** comprend une virole (221,321,431) solidaire de la chambre de séparation (250,350,450), s'étendant sur une partie de cette chambre depuis son entrée et l'entourant en laissant subsister un jeu annulaire (222,322) entre la chambre de séparation (250,350,450) et la virole (221,321,431).

8. Dispositif selon la revendication précédente, **caractérisé en ce que** la virole (221) est entourée d'une enveloppe (225) de forme sensiblement cylindrique dont elle est séparée par un espace annulaire, cette enveloppe étant libre en rotation par rapport à la chambre de séparation (250), s'étendant au-delà de la virole (221) le long de l'axe de la chambre de séparation (250) et étant munie de perforations (220) permettant au mélange de s'introduire entre la chambre de séparation (250) et l'enveloppe (225) puis dans le jeu annulaire (222).

9. Dispositif selon l'une quelconque des revendications précédentes, **caractérisé en ce qu'**il comprend en outre des moyens (226) pour entraîner en rotation la chambre de séparation (250).

10. Dispositif selon la revendication 4, **caractérisé en ce que** la chambre de recueil (304) est solidaire en rotation avec la chambre de séparation (350) et munie d'orifices (338) débouchant dans une chambre intermédiaire (324) dont une paroi (327) est libre en rotation par rapport à la chambre de séparation (350) et munie d'une grille (339) débouchant dans la conduite d'évacuation (315).

11. Dispositif selon l'une quelconque des revendications 5 et 6, **caractérisé en ce que** les perforations (433,541,632) sont des canaux convergents débouchant tangentiellement dans la chambre de séparation (450,550,650).

12. Dispositif selon l'une des revendications 5 à 7, **caractérisé en ce que** l'entrée de la chambre de séparation (450) est munie d'un obturateur (434) déplacable par rapport à cette chambre (450) et disposé de façon à obstruer tout ou partie des perforations (433).

13. Dispositif selon la revendication 7, **caractérisé en ce que** la virole (431) est munie d'orifices (430) pour l'introduction du mélange.

14. Dispositif selon l'une quelconque des revendications 1 à 6, **caractérisé en ce que** la chambre de séparation (550) présente, au niveau de son entrée, un diamètre supérieur à celui du reste de la chambre de séparation (550).

15. Dispositif selon l'une quelconque des revendications 1 à 6 et 14, **caractérisé en ce que** l'entrée de la chambre de séparation (550) comprend des moyens (560) d'introduction ou de soutirage d'un gaz, ces moyens étant situés au niveau de l'axe de la chambre de séparation (550).

16. Dispositif selon la revendication précédente, **caractérisé en ce que** les moyens (560) sont constitués par une tuyauterie (560) coaxiale avec l'axe de la chambre de séparation (550).

17. Dispositif selon l'une quelconque des revendications 1 à 4, **caractérisé en ce que** la pièce sensiblement cylindrique (P2) présente une extrémité effilée (102,202,402,502,602) du côté de la chambre de séparation (100,250,350,450,550,650).

18. Dispositif selon l'une quelconque des revendications précédentes, **caractérisé en ce que** la pièce centrale (P3) présente une partie ayant la forme d'un cylindre plein.

19. Dispositif selon l'une quelconque des revendications précédentes, **caractérisé en ce que** la pièce centrale (P3) est de longueur axiale inférieure à celle de la pièce cylindrique (P2).

20. Dispositif selon la revendication précédente, **caractérisé en ce que** la pièce centrale (P3) se prolonge par une partie conique et comprend au moins deux ailettes (117,217).

21. Dispositif selon l'une quelconque des revendications 1 à 3, **caractérisé en ce qu'**il comprend en outre :

   - une chambre de recueil (931) dans laquelle débouche le premier orifice annulaire (919);
   - une pompe à huile (902);
   - de préférence également une pompe à eau (904);

   **et en ce que** les pièces (902, 903, 904, 931, P1, P2, P3) forment un ensemble aligné.

22. Dispositif selon la revendication précédente, **caractérisé en ce qu'**il comprend en outre des moyens d'entraînement en rotation (905) dudit ensemble formé par les pièces (902, 903, 904, 931, P1, P2, P3).

23. Dispositif selon la revendication précédente, **caractérisé en ce qu'**il est dimensionné de façon à pouvoir être installé dans un tube (901) constituant la paroi d'un puits de pétrole.

24. Dispositif selon l'une quelconque des revendications 1 à 20, **caractérisé en ce que** la pièce centrale (P3) est pourvue d'un tube central d'évacuation des gaz (720,820).

25. Dispositif selon l'une quelconque des revendications 1 à 6 et 17, **caractérisé en ce que** la pièce centrale (645) présente sensiblement la forme d'un cylindre (645) coaxial avec la chambre de séparation (650), s'étendant de l'entrée à la sortie de cette demière, et étant apte, au niveau de la sortie de la chambre de séparation (650), à récupérer un fluide léger.

26. Dispositif selon l'une quelconque des revendications 1 à 20 et 25, **caractérisé en ce que :**

   - le second orifice (711) se prolonge par une première chambre de mesure (714) communiquant au moyen de tubes capillaires (716) avec une seconde chambre de mesure (715) muni d'un orifice (726),
   - un premier capteur de pression différentielle (730) est disposé entre les première et seconde chambres de mesure (714,715); et
   - un second capteur de pression différentielle (731) est disposé entre la seconde chambre de mesure (715) et le milieu (725) dans lequel débouche l'orifice (726).

27. Dispositif selon l'une quelconque des revendications 1 à 20 et 24, **caractérisé en ce que**

- le premier orifice (810) débouche dans une première chambre (804) communiquant avec des tuyauteries calibrées (831) débouchant dans le milieu extérieur;
- le second orifice (811) débouche dans une seconde chambre (805) communiquant avec une tuyauterie calibrée (830) débouchant dans le milieu extérieur;
- deux sondes (832,833) sont disposées dans l'une des tuyauteries calibrées (831), l'une (832) étant située en un point proche de la première chambre (804) et l'autre (833) en un point proche du milieu extérieur; ces deux sondes (832,833) sont reliées à un appareil de mesure (840);
- deux sondes (834,835) sont disposées dans la tuyauterie calibrées (830), l'une (834) étant située en un point proche de la seconde chambre (805) et l'autre (835) en un point proche du milieu extérieur; ces deux sondes (834,835) sont reliées à un appareil de mesure (841).

28. Dispositif selon l'une quelconque des revendications précédentes, **caractérisé en ce qu'**il est précédé d'un mélangeur comprenant :

- une conduite (1152) coaxiale avec la chambre de sépartion (1106), dont les deux extrémités sont ouvertes et comportant des orifices d'entrée (1154) et des orifices de sortie (1155) éloignés axialement desdits orifices d'entrée (1154);
- des moyens de séparation (1151) définissant un premier étage et un second étage, disposés de façon à ce que lesdits orifices d'entrée (1154) se trouvent dans le permier étage et lesdits orifices de sortie (1155) dans le second étage.

29. Procédé de séparation des constituants d'un mélange hétérogène, dans lequel :

on introduit le mélange à traiter à l'entrée d'un dispositif comprenant une chambre de séparation (100,250,350,450,550,650,724,850,903,1106) ayant à l'une de ses extrémités une entrée et à l'autre de ses extrémités une sortie comportant un premier orifice annulaire (110,210,310, 410,510,610,710,810,919) coaxial avec ladite chambre, et un second orifice annulaire (111,211,311,411,511,611,711,811,920) coaxial avec ledit premier orifice annulaire et dont le diamètre extérieur est inférieur au diamètre intérieur dudit premier orifice annulaire, ladite chambre de séparation présentant une forme cylindrique et le diamètre extérieur $D_1$ dudit premier orifice annulaire étant inférieur au

diamètre intérieur $D_0$ de ladite chambre, tandis que la sortie de la chambre de séparation (100,250,350,450,550,650,724,850,903,1106) présente :

- une pièce annulaire périphérique (P1), s'étendant depuis la paroi de la chambre de séparation (100,250,350,450,550, 650,724,850,903,1106) vers l'axe de cette chambre (100,250,350,450,550,650,724, 850,903,1106),
- une pièce sensiblement cylindrique (P2),
- une pièce centrale (P3,645) ayant une section transversale circulaire,
- la pièce sensiblement cylindrique (P2) étant disposée entre la pièce annulaire périphérique (P1) et la pièce centrale (P3,645), et les trois pièces (P1;P2; P3,645) étant coaxiales avec la chambre de séparation (100,250,350,450,550,650, 724,850,903,1106), de façon à ce que

  * le premier orifice annulaire (110,210, 310,410,510,610,710,810,919) soit constitué par l'espace entre la pièce annulaire périphérique (P1) et la pièce sensiblement cylindrique (P2), et
  * le second orifice annulaire (111,211, 311,411,511,611,711,811,920) soit constitué par l'espace entre la pièce sensiblement cylindrique (P2) et la pièce centrale (P3,645) ; et

on récupère une fraction lourde à travers ledit premier orifice annulaire et une fraction légère à travers ledit second orifice annulaire.

30. Procédé selon la revendication 29, **caractérisé en que** le mélange à traiter est introduit dans l'entrée de ladite chambre de séparation (250) de telle manière qu'il ait la même vitesse angulaire que celle de cette chambre de séparation (250).

31. Utilisation d'un dispositif selon l'une quelconque des revendications 1 à 28 pour la séparation d'un mélange d'eau et de pétrole.

32. Utilisation d'un dispositif selon l'une quelconque des revendications 20 à 23 pour la séparation d'un mélange d'eau et de pétrole en fond de puits de pétrole.

33. Utilisation du dispositif selon la revendication 26 ou la revendication 27 pour la détection et/ou mesure du fluide léger contenu dans un fluide lourd.

**Patentansprüche**

1. Vorrichtung zur Trennung der Bestandteile eines heterogenen Gemisches, wobei die Vorrichtung eine Trennkammer (100, 250, 350, 450, 550, 650, 724, 850, 903, 1106) umfaßt, die an einem ihrer Enden einen Einlaß und am anderen ihrer Enden einen Auslaß aufweist mit einer ersten ringförmigen Öffnung (110, 210, 310, 410, 510, 610, 710, 810, 919), die zu der Kammer koaxial ist, und einer zweiten ringförmigen Öffnung (111, 211, 311, 411, 511, 611, 711, 811, 920), die zu der ersten ringförmigen Öffnung koaxial ist und deren Außendurchmesser kleiner ist als der Innendurchmesser der ersten ringförmigen Öffnung, **dadurch gekennzeichnet, daß** die Trennkammer eine zylindrische Form aufweist, daß der Außendurchmesser $D_1$ der ersten ringförmigen Öffnung kleiner ist als der Innendurchmesser $D_0$ der Kammer und daß der Auslaß der Trennkammer (100, 250, 350, 450, 550, 650, 724, 850, 903, 1106) folgendes aufweist:

   - ein ringförmiges Periferiestück (P1), das sich von der Wandung der Trennkammer (100, 250, 350, 450, 550, 650, 724, 850, 903, 1106) zu der Achse der Kammer (100, 250, 350, 450, 550, 650, 724, 850, 903, 1106) erstreckt,
   - ein im wesentlichen zylindrisches Stück (P2),
   - ein zentrales Stück (P3, 645) mit kreisförmigem Querschnitt,
   - wobei das im wesentlichen zylindrische Stück (P2) zwischen dem ringförmigen Peripheriestück (P1) und dem zentralen Stück (P3, 645) angeordnet ist und die drei Stücke (P1; P2; P3, 645) derart zu der Trennkammer (100, 250, 350, 450, 550, 650, 724, 850, 903, 1106) koaxial sind, daß

      * die erste ringförmige Öffnung (110, 210, 310, 410, 510, 610, 710, 810, 919) durch den Raum zwischen dem ringförmigen Peripheriestück (P1) und dem im wesentlichen zylindrischen Stück (P2) gebildet ist, und
      * die zweite ringförmige Öffnung (111, 211, 311, 411, 511, 611, 711, 811, 920) durch den Raum zwischen dem im wesentlichen zylindrischen Stück (P2) und dem zentralen Stück (P3, 645) gebildet ist.

2. Vorrichtung nach Anspruch 1, **dadurch gekennzeichnet, daß** der Außendurchmesser der zweiten ringförmigen Öffnung (111, 211, 311, 411, 511, 611, 711, 811, 920) größer ist als das 0,3-fache des Innendurchmessers $D_0$ der Trennkammer (100, 250, 350, 450, 550, 650, 724, 850, 903, 1106).

3. Vorrichtung nach Anspruch 1 oder 2, **dadurch gekennzeichnet, daß** der Außendurchmesser $D_1$ der ersten ringförmigen Öffnung (110, 210, 310, 410, 510 , 610, 710, 810, 919) größer ist als das 0,4-fache des Innendurchmessers $D_0$ der Trennkammer (100, 250,350, 450, 550, 650, 724, 850, 903, 1106).

4. Vorrichtung nach einem der Ansprüche 1 bis 3, **dadurch gekennzeichnet, daß** die erste ringförmige Öffnung (110, 210, 310, 410, 510, 610) in eine Sammelkammer (104, 204, 304, 604) mündet, die mit einer Absaugleitung (115, 215, 315, 615) in Verbindung steht.

5. Vorrichtung nach einem der vortehenden Ansprüche, **dadurch gekennzeichnet, daß** der Einlaß der Trennkammer (250, 350, 450, 550, 650) in seiner Wandung (200, 300 400, 600) Perforierungen (223, 323, 433, 541, 632) aufweist, die die Zufuhr von Gemisch gestatten.

6. Vorrichtung nach einem der vorstehenden Ansprüche, **dadurch gekennzeichnet, daß** die Trennkammer (250, 350, 450, 550,650) an ihrem Einlaß mit einem konischen oder spitzkegeligen Abschnitt (224, 424 , 524, 624) ausgestattet ist, der koaxial zu der Trennkammer (100, 250, 350, 450, 550, 650) ist und an dieser befestigt ist.

7. Vorrichtung nach einem der vorstehenden Ansprüche, **dadurch gekennzeichnet, daß** sie einen mit der Trennkammer (250, 350, 450) verbundenen Mantel (221, 321, 431) aufweist, der sich über einen Abschnitt dieser Kammer von deren Einlaß ab erstreckt und diese umgibt, wobei zwischen der Trennkammer (250, 350, 450) und dem Mantel (221, 321, 431) ein ringförmiger Spielraum (221, 321, 431) bestehen bleibt.

8. Vorrichtung nach dem vorstehenden Anspruch, **dadurch gekennzeichnet, daß** der Mantel (221) von einer im wesentlichen zylindrischen Hülle (225) umgeben ist, von der er durch einen ringförmigen Abstand getrennt ist, wobei die Umhüllung drehfrei in Bezug auf die Trennkammer (250) ist, sich jenseits des Mantels (221) entlang der Achse der Trennkammer (250) erstreckt und mit Perforierungen (220) ausgestattet ist, die dem Gemisch erlauben, zwischen die Trennkammer (250) und die Umhüllung (225) und dann den ringförmigen Spielraum (222) einzutreten.

9. Vorrichtung nach einem der vorstehenden Ansprüche, des weiteren **gekennzeichnet durch** Mittel (226) zum In-Rotation-Versetzen der Trennkammer (250).

10. Vorrichtung nach Anspruch 4, **dadurch gekennzeichnet, daß** die Auffangkammer (304) drehfest mit der Trennkammer (350) ausgebildet ist und Mündungen (338) aufweist, die in eine Zwischenkammer (324) münden, deren eine Wandung (327) drehfrei in Bezug auf die Trennkammer (350) ist und ein Gitter (339) aufweist, das in die Absaugleitung (315) mündet.

11. Vorrichtung nach einem der Ansprüche 5 und 6, **dadurch gekennzeichnet, daß** die Perforierungen (433, 541, 632) konvergierende Kanäle sind, die tangentiell in die Trennkammer (450, 550, 650) münden.

12. Vorrichtung nach einem der Ansprüche 5 bis 7, **dadurch gekennzeichnet, daß** der Einlaß der Trennkammer (450) einen Verschluß (434) aufweist, der in Bezug auf diese Kammer (450) verstellbar ist und derart angeordnet ist, um die Perforierungen (433) ganz oder teilweise zu verschließen.

13. Vorrichtung nach Anspruch 7, **dadurch gekennzeichnet, daß** der Mantel (431) Öffnungen (430) zum Durchtritt von Gemisch aufweist.

14. Vorrichtung nach einem der Ansprüche 1 bis 6, **dadurch gekennzeichnet, daß** die Trennkammer (550) im Bereich ihres Einlasses einen Durchmesser aufweist, der größer ist als derjenige des Restes der Trennkammer (550).

15. Vorrichtung nach einem der Ansprüche 1 bis 6 und 14, **dadurch gekennzeichnet, daß** der Einlaß der Trennkammer (550) Mittel (560) zum Zuführen oder Abziehen von Gas aufweist, wobei diese Mittel im Bereich der Achse der Trennkammer (550) angeordnet sind.

16. Vorrichtung nach dem vorstehenden Anspruch, **dadurch gekennzeichnet, daß** die Mittel (560) durch eine mit der Achse der Trennkammer (550) koaxialen Leitungsanordnung gebildet sind.

17. Vorrichtung nach einem der Ansprüche 1 bis 4, **dadurch gekennzeichnet, daß** das im wesentlichen zylindrische Stück (P2) auf der Seite der Trennkammer (100, 250, 350, 450, 550, 650) ein zugespitztes Ende (102, 202, 402, 502, 602) aufweist.

18. Vorrichtung nach einem der vorstehenden Ansprüche, **dadurch gekennzeichnet, daß** das zentrale Stück (P3) einen Abschnitt aufweist, der die Form eines Vollzylinders hat.

19. Vorrichtung nach einem der vorstehenden Ansprüche, **dadurch gekennzeichnet, daß** das zentrale Stück (P3) eine axiale Länge hat, die kleiner ist als diejenige des zylindrischen Stücks (P2).

20. Vorrichtung nach dem vorstehenden Anspruch, **dadurch gekennzeichnet, daß** sich das zentrale Stück (P3) durch einen konischen Abschnitt fortsetzt und mindestens zwei Flügel (117, 217) aufweist.

21. Vorrichtung nach einem der Ansprüche 1 bis 3, des weiteren **gekennzeichnet durch**:

    - eine Auffangkammer (931), in die die erste ringförmige Öffnung (919) mündet,
    - eine Ölpumpe (902),
    - vorzugsweise auch eine Wasserpumpe (904),

    und daß die Stücke (902, 903, 904, 931, P1, P2, P3) eine aufgereihte Anordnung bilden.

22. Vorrichtung nach dem vorstehenden Anspruch, des weiteren **gekennzeichnet durch** Drehantriebsmittel (905) zum Drehen der **durch** die Stücke (902, 903, 904, 931, P1, P2, P3) gebildeten Anordnung.

23. Vorrichtung nach dem vorstehenden Anspruch, **dadurch gekennzeichnet, daß** sie derart dimensioniert ist, daß sie in einem Rohr (901) installiert werden kann, das die Wandung eines Erdölbohrlochs bildet.

24. Vorrichtung nach einem der Ansprüche 1 bis 20, **dadurch gekennzeichnet, daß** das zentrale Stück (P3) mit einer zentralen Gasevakuierungsröhre (720, 820) ausgestattet ist.

25. Vorrichtung nach einem der Ansprüche 1 bis 6 und 17, **dadurch gekennzeichnet, daß** das zentrale Stück (645) im wesentlichen die Form eines zu der Trennkammer (650) koaxialen Zylinders (645) aufweist, der sich von dem Einlaß bis zum Auslaß der Kammer erstreckt und dazu geeignet ist, im Bereich des Auslasses der Trennkammer (650) ein leichtes Fluid zu gewinnen.

26. Vorrichtung nach einem der Ansprüche 1 bis 20 und 25, **dadurch gekennzeichnet, daß**:

    - sich die zweite Öffnung (711) durch eine erste Meßkammer (714) fortsetzt, die mittels Kapillarröhren (716) mit einer zweiten mit einer Öffnung (726) versehenen Meßkammer (715) in Verbindung steht,
    - ein erster Wirkdruckgeber (730) zwischen der ersten Meßkammer (714) und der zweiten Meßkammer (715) angeordnet ist, und
    - ein zweiter Wirkdruckgeber (731) zwischen der zweiten Meßkammer (715) und dem Medium (725), in das die Öffnung (726) mündet, angeordnet ist.

27. Vorrichtung nach einem der Ansprüche 1 bis 20 und 24, **dadurch gekennzeichnet, daß**

- die erste Öffnung (810) in eine erste Kammer (804) mündet, die mit kalibrierten Leitungen (831) in Verbindung steht, die in das Außenmedium münden,
- die zweite Öffnung (811) in eine zweite Kammer (805) mündet, die mit einer kalibrierten Leitung (830) in Verbindung steht, die in das Außenmedium mündet,
- zwei Sonden (832, 833) in einer der kalibrierten Leitungen (831) angeordnet sind, von denen eine (832) an einem der ersten Kammer (804) nahen Punkt angeordnet ist und die andere (833) in einem dem Außenmedium nahen Punkt angeordnet ist, wobei diese beiden Sonden (832, 833) mit einem Meßgerät (840) verbunden sind,
- zwei Sonden (834, 835) in der kalibrierten Leitung (830) angeordnet sind, von denen eine (834) in einem der zweiten Kammer (805) nahen Punkt angeordnet ist und die andere (835) in einem dem Außenmedium nahen Punkt angeordnet ist, wobei diese beiden Sonden (834, 835) mit einem Meßgerät (841) verbunden sind.

28. Vorrichtung nach einem der vorstehenden Ansprüche, **dadurch gekennzeichnet, daß** ihr ein Mischapparat vorgeschaltet ist, der folgendes umfaßt:

- eine Leitung (1152), die zu der Trennkammer (1106) koaxial ist und deren beiden Enden offen sind und Einlaßöffnungen (1154) und axial von den Einlaßöffnungen (1154) entfernte Auslaßöffnungen (1155) aufweist,
- Trennmittel (1151), die eine erste Stufe und eine zweite Stufe definieren und derart angeordnet sind, daß die Einlaßöffnungen (1154) in der ersten Stufe und die Auslaßöffnungen (1155) in der zweiten Stufe angeordnet sind.

29. Verfahren zum Trennen von Bestandteilen eines heterogenen Gemisches, in dem:

das zu behandelnde Gemisch am Einlaß einer Vorrichtung zugegeben wird, die eine Trennkammer (100, 250, 350, 450, 550, 650, 724, 850, 903, 1106) umfaßt, die an dem einen ihrer Enden einen Einlaß und an dem anderen ihrer Enden einen Auslaß aufweist mit einer zu der Kammer koaxialen ersten ringförmigen Öffnung (110, 210, 310, 410, 510, 610, 710, 810, 919) und einer mit der ersten ringförmigen Öffnung koaxialen zweiten ringförmigen Öffnung (111, 211, 311, 411, 511, 611, 711, 811, 920), deren Außendurchmesser kleiner ist als der Innendurchmesser der ersten ringförmigen Öffnung, wobei die Trennkammer eine im wesentlichen zylindrische Form besitzt und der Außendurchmesser $D_1$ der ersten ringförmigen Öffnung kleiner ist als der Innendurchmesser $D_0$ der Kammer, wobei der Auslaß der Trennkammer (100, 250, 350, 450, 550, 650, 724, 850, 903, 1106) folgendes aufweist:

- ein ringförmiges Periferiestück (P1), das sich von der Wandung der Trennkammer (100, 250, 350, 450, 550, 650, 724, 850, 903, 1106) bis zu der Achse der Kammer (100, 250, 350, 450, 550, 650, 724, 850, 903, 1106) erstreckt,
- ein im wesentlichen zylindrisches Stück (P2),
- ein zentrales Stück (P3, 645) mit kreisförmigem Querschnitt,
- wobei das im wesentlichen zylindrische Stück (P2) zwischen dem ringförmigen Peripheriestück (P1) und dem zentralen Stück (P3, 645) angeordnet ist und die drei Stücke (P1; P2; P3, 645) derart zu der Trennkammer (100, 250, 350, 450, 550, 650, 724, 850, 903, 1106) koaxial sind, daß

  * die erste ringförmige Öffnung (110, 210, 310, 410, 510, 610, 710, 810, 919) durch den Raum zwischen dem ringförmigen Peripheriestück (P1) und dem im wesentlichen zylindrischen Stück (P2) gebildet ist, und
  * die zweite ringförmige Öffnung (111, 211, 311, 411, 511, 611, 711, 811, 920) durch den Raum zwischen dem im wesentlichen zylindrischen Stück (P2) und dem zentralen Stück (P3, 645) gebildet ist, und

eine schwere Fraktion durch die erste ringförmige Öffnung und eine leichte Fraktion durch die zweite ringförmige Öffnung gewonnen wird.

30. Verfahren nach Anspruch 29, **dadurch gekennzeichnet, daß** das zu behandelnde Gemisch derart durch den Einlaß der Trennkammer (250) zugegeben wird, daß es die gleiche Winkelgeschwindigkeit hat wie die diejenige der Trennkammer (250).

31. Verwendung einer Vorrichtung nach einem der Ansprüche 1 bis 28 zum Trennen eines Wasser-/Ölgemischs.

32. Verwendung einer Vorrichtung nach einem der Ansprüche 20 bis 23 zum Trennen eines Wasser-/Ölgemischs am Boden eines Erdölbohrlochs.

33. Verwendung einer Vorrichtung nach Anspruch 26 oder Anspruch 27 zum Detektieren und/oder Messen von in einem schweren Fluid enthaltenem leichten Fluid.

## Claims

1. Device for separating the constituents of a heterogeneous mixture, the said device comprising a separating chamber (100, 250, 350, 450, 550, 650, 724, 850, 903, 1106) having, at one of its ends, an inlet and, at its other end, an outlet having a first annular orifice (110, 210, 310, 410, 510, 610, 710, 810, 919) which is coaxial with the said chamber, and a second annular orifice (111, 211, 311, 411, 511, 611, 711, 811, 920) which is coaxial with the said first annular orifice and the external diameter of which is smaller than the internal diameter of the said first annular orifice, **characterised in that** the said separating chamber has a cylindrical shape, **in that** the external diameter $D_1$ of the said first annular orifice is smaller than the internal diameter $D_0$ of the said chamber, **and in that** the outlet of the separating chamber (100, 250, 350, 450, 550, 650, 724, 850, 903, 1106) has:

   - a peripheral annular piece (P1) extending from the wall of the separating chamber (100, 250, 350, 450, 550, 650, 724, 850, 903, 1106) towards the axis of the said chamber (100, 250, 350, 450, 550, 650, 724, 850, 903, 1106),
   - a substantially cylindrical piece (P2),
   - a central piece (P3, 645) having a circular cross-section,
   - the substantially cylindrical piece (P2) being disposed between the peripheral annular piece (P1) and the central piece (P3, 645), and the three pieces (P1; P2; P3, 645) being coaxial with the separating chamber (100, 250, 350, 450, 550, 650, 724, 850, 903, 1106), in such a way that

     * the first annular orifice (110, 210, 310, 410, 510, 610, 710, 810, 919) is constituted by the space between the peripheral annular piece (P1) and the substantially cylindrical piece (P2), and
     * the second annular orifice (111, 211, 311, 411, 511, 611, 711, 811, 920) is constituted by the space between the substantially cylindrical piece (P2) and the central piece (P3, 645).

2. Device according to claim 1, **characterised in that** the external diameter of the second annular orifice (111, 211, 311, 411, 511, 611, 711, 811, 920) is greater than 0.3 times the internal diameter $D_0$ of the separating chamber (100, 250, 350, 450, 550, 650, 724, 850, 903, 1106).

3. Device according to claim 1 or claim 2, **characterised in that** the external diameter $D_1$ of the first annular orifice (110, 210, 310, 410, 510, 610, 710, 810, 919) is greater than 0.4 times the internal diameter $D_0$ of the separating chamber (100, 250, 350, 450, 550, 650, 724, 850, 903, 1106).

4. Device according to any one of claims 1 to 3, **characterised in that** the first annular orifice (110, 210, 310, 410, 510, 610) opens into a collecting chamber (104, 204, 304, 604) communicating with an evacuating conduit (115, 215, 315, 615).

5. Device according to any one of the preceding claims, **characterised in that** the inlet of the separating chamber (250, 350, 450, 550, 650) comprises, in its wall (200, 300, 400, 600), perforations (223, 323, 433, 541, 632) which permit the introduction of the mixture.

6. Device according to any one of the preceding claims, **characterised in that** the separating chamber (250, 350, 450, 550, 650) is equipped, at its inlet, with a conical part or conical point (224, 424, 524, 624) which is coaxial with the separating chamber (100, 250, 350, 450, 550, 650) and fixed to the latter.

7. Device according to any one of the preceding claims, **characterised in that** it comprises a sleeve (221, 321, 431) which is integral with the separating chamber (250, 350, 450) and which extends over part of the said chamber from its inlet and surrounds it while leaving an annular clearance (222, 322) between the separating chamber (250, 350, 450) and the sleeve (221, 321, 431).

8. Device according to the preceding claim, **characterised in that** the sleeve (221) is surrounded by a casing (225) of substantially cylindrical shape, from which it is separated by an annular space, the said envelope being free in rotation in relation to the separating chamber (250), extending beyond the sleeve (221) along the axis of the separating chamber (250) and being equipped with perforations (220) which permit the introduction of the mixture between the separating chamber (250) and the casing (225) and then into the annular clearance (222).

9. Device according to any one of the preceding claims, **characterised in that** it also comprises means (226) for driving the separating chamber (250) in rotation.

10. Device according to claim 4, **characterised in that** the collecting chamber (304) is integral in rotation with the separating chamber (350) and equipped with orifices (338) opening into an intermediate chamber (324) of which one wall (327) is free in rotation in relation to the separating chamber (350) and equipped with a grille (339) opening into the evacuating conduit (315).

11. Device according to any one of claims 5 and 6, **characterised in that** the perforations (433, 541, 632) are convergent ducts opening tangentially into the separating chamber (450, 550, 650).

12. Device according to one of claims 5 to 7, **characterised in that** the inlet of the separating chamber (450) is equipped with an obturator (434) which is displaceable in relation to the said chamber (450) and is disposed in such a way as to obstruct all or part of the perforations (433).

13. Device according to claim 7, **characterised in that** the sleeve (431) is equipped with orifices (430) for the introduction of the mixture.

14. Device according to any one of claims 1 to 6, **characterised in that** the separating chamber (550) has, at the level of its inlet, a diameter which is greater than that of the rest of the separating chamber (550).

15. Device according to any one of claims 1 to 6 and 14, **characterised in that** the inlet of the separating chamber (550) comprises means (560) for introducing or drawing off a gas, the said means being situated at the level of the axis of the separating chamber (550).

16. Device according to the preceding claim, **characterised in that** the means (560) are constituted by a pipe system (560) which is coaxial with the axis of the separating chamber (550).

17. Device according to any one of claims 1 to 4, **characterised in that** the substantially cylindrical piece (P2) has a tapered end (102, 202, 402, 502, 602) in the direction of the separating chamber (100, 250, 350, 450, 550, 650).

18. Device according to any one of the preceding claims, **characterised in that** the central piece (P3) has a part having the shape of a solid cylinder.

19. Device according to any one of the preceding claims, **characterised in that** the central piece (P3) has an axial length which is smaller than that of the cylindrical piece (P2).

20. Device according to the preceding claim, **characterised in that** the central piece (P3) is prolonged by a conical part and comprises at least two fins (117, 217).

21. Device according to any one of claims 1 to 3, **characterised in that** it also comprises:

    - a collecting chamber (931) into which the first annular orifice (919) opens;
    - an oil pump (902);
    - preferably a water pump (904) too;

    **and in that** the pieces (902, 903, 904, 931, P1, P2, P3) form an aligned set.

22. Device according to the preceding claim, **characterised in that** it also comprises means (905) for driving in rotation the set formed by the pieces (902, 903, 904, 931, P1, P2, P3).

23. Device according to the preceding claim, **characterised in that** it is dimensioned in such a way as to be capable of being installed in a tube (901) constituting the wall of an oil well.

24. Device according to any one of claims 1 to 20, **characterised in that** the central piece (P3) is provided with a central gas-evacuating tube (720, 820).

25. Device according to any one of claims 1 to 6 and 17, **characterised in that** the central piece (645) has substantially the shape of a cylinder (645) which is coaxial with the separating chamber (650), extends from the inlet to the outlet of the latter, and is capable, at the level of the outlet of the separating chamber (650), of recovering a light fluid.

26. Device according to any one of claims 1 to 20 and 25, **characterised in that:**

    - the second orifice (711) is prolonged by a first measuring chamber (714) communicating by means of capillary tubes (716) with a second measuring chamber (715) equipped with an orifice (726);
    - a first differential-pressure sensor (730) is disposed between the first and second measuring chambers (714, 715); and
    - a second differential-pressure sensor (731) is disposed between the second measuring chamber (715) and the environment (725) into which the orifice (726) opens.

27. Device according to any one of claims 1 to 20 and 24, **characterised in that:**

    - the first orifice (810) opens into a first chamber (804) communicating with calibrated pipe systems (831) opening into the external environment;
- the second orifice (811) opens into a second chamber (805) communicating with a calibrated pipe system (830) opening into the external environment;
- two probes (832, 833) are disposed in one of the calibrated pipe systems (831), one of the said probes (832) being situated at a point close to the first chamber (804) and the other (833), at a point close to the external environment; the said two probes (832, 833) are connected to a measuring apparatus (840);
- two probes (834, 835) are disposed in the calibrated pipe system (830), one of the said probes (834) being situated at a point close to the second chamber (805) and the other (835), at a point close to the external environment; the said two probes (834, 835) are connected to a measuring apparatus (841).

28. Device according to any one of the preceding claims, **characterised in that** it is preceded by a mixer comprising:

- a conduit (1152) which is coaxial with the separating chamber (1106), whose two ends are open and which has inlet orifices (1154) and outlet orifices (1155) which are axially remote from the said inlet orifices (1154) ;
- separating means (1151) which define a first stage and a second stage and are disposed in such a way that the said inlet orifices (1154) are located in the first stage and the said outlet orifices (1155), in the second stage.

29. Process for separating the constituents of a heterogeneous mixture, wherein:

the mixture to be treated is introduced at the inlet of a device comprising a separating chamber (100, 250, 350, 450, 550, 650, 724, 850, 903, 1106) having, at one of its ends, an inlet and, at its other end, an outlet having a first annular orifice (110, 210, 310, 410, 510, 610, 710, 810, 919) which is coaxial with the said chamber, and a second annular orifice (111, 211, 311, 411, 511, 611, 711, 811, 920) which is coaxial with the said first annular orifice and the external diameter of which is smaller than the internal diameter of the said first annular orifice, the said separating chamber having a cylindrical shape and the external diameter $D_1$ of the said first annular orifice being smaller than the internal diameter $D_0$ of the said chamber, while the outlet of the separating chamber (100, 250, 350, 450, 550, 650, 724, 850, 903, 1106) has:

- a peripheral annular piece (P1) extending from the wall of the separating chamber (100, 250, 350, 450, 550, 650, 724, 850, 903, 1106) towards the axis of the said chamber (100, 250, 350, 450, 550, 650, 724, 850, 903, 1106),
- a substantially cylindrical piece (P2),
- a central piece (P3, 645) having a circular cross-section,
- the substantially cylindrical piece (P2) being disposed between the peripheral annular piece (P1) and the central piece (P3, 645), and the three pieces (P1; P2; P3, 645) being coaxial with the separating chamber (100, 250, 350, 450, 550, 650, 724, 850, 903, 1106), in such a way that

* the first annular orifice (110, 210, 310, 410, 510, 610, 710, 810, 919) is constituted by the space between the peripheral annular piece (P1) and the substantially cylindrical piece (P2), and
* the second annular orifice (111, 211, 311, 411, 511, 611, 711, 811, 920) is constituted by the space between the substantially cylindrical piece (P2) and the central piece (P3, 645); and

a heavy fraction is recovered through the said first annular orifice and a light fraction, through the said second annular orifice.

30. Process according to claim 29, **characterised in that** the mixture to be treated is introduced into the inlet of the said separating chamber (250) in such a manner that it has the same angular velocity as that of the said separating chamber (250).

31. Use of a device according to any one of claims 1 to 28 for separating a mixture of water and petroleum.

32. Use of a device according to any one of claims 20 to 23 for separating a mixture of water and petroleum at the bottom of an oil well.

33. Use of the device according to claim 26 or claim 27 for detecting and/or measuring the light fluid contained in a heavy fluid.

P2

113

104

117

115

112

107

P3  P1

101

110

102

103

111

100

109

108

Fig. 1

Fig. 2

**Fig. 3**

Fig. 4a

Fig. 4b

555

P2

P3

550

562

540

519

Fig. 5a

524

561

560

541

Fig. 5b

**Fig. 6**

**Fig. 7a**

**Fig. 7b**

Fig. 8a

Fig. 8b

Fig. 9a

Fig. 9b

Fig. 10

**Fig. 11a**

**Fig. 11b**